(19) Europäisches Patentamt / European Patent Office / Office européen des brevets

(11) **EP 3 142 457 A1**

(12) **EUROPEAN PATENT APPLICATION**
published in accordance with Art. 153(4) EPC

(43) Date of publication:
**15.03.2017  Bulletin 2017/11**

(51) Int Cl.:
***H04W 88/10*** (2009.01)

(21) Application number: **14897375.3**

(22) Date of filing: **16.06.2014**

(86) International application number:
**PCT/CN2014/079946**

(87) International publication number:
**WO 2016/004553 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co. Ltd.**
**Shenzhen, Guangdong 518129 (CN)**

(72) Inventors:
 • **DENG, Changshun**
  **Shenzhen**
  **Guangdong 518129 (CN)**
 • **LONG, Ke**
  **Shenzhen**
  **Guangdong 518129 (CN)**

 • **ZHAO, Shuchen**
  **Shenzhen**
  **Guangdong 518129 (CN)**
 • **SHI, Rongtao**
  **Shenzhen**
  **Guangdong 518129 (CN)**
 • **LI, Hao**
  **Shenzhen**
  **Guangdong 518129 (CN)**

(74) Representative: **Maiwald Patentanwalts GmbH**
**Engineering**
**Elisenhof**
**Elisenstrasse 3**
**80335 München (DE)**

(54) **WIRELESS COMMUNICATIONS DEVICE**

(57)  A wireless communications device includes a feeding network, two transceivers, and an antenna array including N antenna units, where the feeding network has N antenna ports and two radio frequency ports, the N antenna ports are connected to the N antenna units in a one-to-one correspondence, the two transceivers are connected to the two radio frequency ports in a one-to-one correspondence, and communications standards of radio frequency signals output by the two transceivers to the two radio frequency ports are different from each other; and the feeding network is configured to perform power distribution and phase shifting on a radio frequency signal input from any one radio frequency port in the two radio frequency ports to the feeding network, to obtain N radio frequency signals, and output the N radio frequency signals to the N antenna units through the N antenna ports for transmission. The solutions provided in the embodiments of the present invention help to reduce a fabrication cost of a wireless communications device in a scenario of supporting at least two communications standards.

FIG. 2

## Description

### TECHNICAL FIELD

The present invention relates to the field of communications technologies, and in particular, to a wireless communications device.

### BACKGROUND

With the development and evolution of mobile communications, multi-band multi-standard mobile communication becomes a major trend. Currently, a carrier hopes that a base station can support multiple different communications standards, for example, a carrier hopes that a base station can support at least two of communications standards Global System for Mobile communications (GSM, Global System for Mobile communication), Wideband Code Division Multiple Access (WCDMA, Wideband Code Division Multiple Access), Long Term Evolution (LTE, Long Term Evolution), and the like.

In a current design solution of multiple communications standards, independent antenna units are configured separately for transceivers of different communications standards. For example, a base station includes transceivers of two communications standards, and for the transceivers of the two communications standards, two mutually independent antenna units need to be configured.

However, as independent antenna units are configured separately for transceivers of different communications standards, not only it becomes uneasy to control a fabrication cost, but also mutual interference may also occur between independent antenna units, which may further affect quality of signal coverage.

### SUMMARY

Embodiments of the present invention provide a wireless communications device to reduce a fabrication cost of a wireless communications device in a scenario of supporting at least two communications standards.

To solve the foregoing technical problem, embodiments of the present invention provides the following technical solutions:

According to a first aspect, a wireless communications device includes:

a feeding network, two transceivers, and an antenna array including N antenna units, where
the feeding network has N antenna ports and two radio frequency ports, the N antenna ports are connected to the N antenna units in a one-to-one correspondence, the two transceivers are connected to the two radio frequency ports in a one-to-one correspondence, and communications standards of radio frequency signals output by the two transceivers to the two radio frequency ports are different from each other; and
the feeding network is configured to perform power distribution and phase shifting on a radio frequency signal input from any one radio frequency port in the two radio frequency ports to the feeding network, to obtain N radio frequency signals, and output the N radio frequency signals to the N antenna units through the N antenna ports for transmission, where the N radio frequency signals and the N radio frequency ports are in a one-to-one correspondence, phases of the N radio frequency signals are mutually unequal, and N is a positive integer.

With reference to the first aspect, in a first possible implementation manner of the first aspect, a difference in phases of two radio frequency signals, transmitted by any two adjacent antenna units in the N antenna units, in the N radio frequency signals is equal to $K*360°/N$, where K and N are positive integers, and N is greater than 2.

With reference to the first aspect or the first possible implementation manner of the first aspect, in a second possible implementation manner of the first aspect, the antenna array is an omnidirectional antenna array.

With reference to the second possible implementation manner of the first aspect, in a third possible implementation manner of the first aspect, the horizontal-plane omnidirectional antenna array or vertical-plane omnidirectional antenna array.

With reference to the second possible implementation manner of the first aspect or the third possible implementation manner of the first aspect, in a fourth possible implementation manner of the first aspect, at least one antenna unit in the N antenna units is a single antenna or an antenna subarray.

With reference to the second possible implementation manner of the first aspect or the third possible implementation manner of the first aspect or the fourth possible implementation manner of the first aspect, in a fifth possible implementation manner of the first aspect, feed points of the N antenna units in the antenna array are located on a same ring.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a sixth possible implementation manner of the first aspect, the feeding network includes:

a first combiner, a second combiner, a third combiner, and a fourth combiner, where

a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; and

a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;

or,

a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;

or,

a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a seventh possible implementation manner of the first aspect, the feeding network includes:

a first combiner, a second combiner, a third combiner, and a fourth combiner, where

a scattering matrix among a port 1, a port 2, a port 3, and a port 4 of the second combiner is $[S^2]$, a scattering matrix among a port 1, a port 2, a port 3, and a port 4 of the third combiner is $[S^3]$, a scattering matrix among a port 1, a port 2, a port 3, and a port 4 of the fourth combiner is $[S^4]$, and a scattering matrix among a port 1, a port 2, and a port 3 of the first combiner is $[S^1]$, where

$$\left[S^1\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^2\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; and

a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;

or,

a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;

or,

a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in an eighth possible implementation manner of the first aspect,

the N antenna units include: a first antenna unit, a second antenna unit, a third antenna unit, and a fourth antenna unit; and

the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port $j$ to output at a port $i$; the port 1 of the first combiner is connected to the port 1 of the third combiner, and the port 4 of the first combiner is connected to the port 1 of the fourth combiner; the port 4 of the second combiner is connected to the port 4 of the third combiner, and the port 1 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports include: one of the port 2 of the first combiner and the port 3 of the first combiner, and one of the port 2 of the second combiner and the port 3 of the second combiner.

With reference to the eighth possible implementation manner of the first aspect, in a ninth possible implementation manner of the first aspect, at least one of the third combiner and the fourth combiner is a 90° hybrid bridge.

With reference to the eighth possible implementation manner of the first aspect or the ninth possible implementation manner of the first aspect, in a tenth possible implementation manner of the first aspect, the first combiner is a 180° hybrid bridge; or, the first combiner includes a first hybrid bridge and a first phase shifter, where the first hybrid bridge is a 90° hybrid bridge, and the first phase shifter is a 90° phase shifter, where a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, where a scattering matrix of the first hybrid bridge is $[S_{90}]$, where

$$\left[S_{90}\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the eighth possible implementation manner of the first aspect or the ninth possible implementation manner of the first aspect or the tenth possible implementation manner of the first aspect, in an eleventh possible implementation manner of the first aspect, the second combiner is a 180° hybrid bridge; or, the second combiner includes a second hybrid bridge and a second phase shifter, where the second hybrid bridge is a 90° hybrid bridge, and the second phase shifter is a 90° phase shifter, where a port 1 of the second hybrid bridge is used as the port 3 of the second combiner, a port 4 of the second hybrid bridge is used as the port 2 of the second combiner, a port 2 of the second hybrid bridge is used as the port 4 of the second combiner, one end of the second phase shifter is connected to a port 3 of the second hybrid bridge, and the other end of the second phase shifter is used as the port 1 of the second combiner, where a scattering matrix of the second hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twelfth possible implementation manner of the first aspect,

the N antenna units include: a first antenna unit, a second antenna unit, a third antenna unit, and a fourth antenna unit; and the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

where an element $s_{ij}$ in a scattering matrix represents an ideal scattering coefficient from input at a port j to output at a port i; the port 2 of the first combiner is connected to the port 4 of the third combiner, and the port 3 of the first combiner is connected to the port 1 of the fourth combiner; the port 2 of the second combiner is connected to the port 1 of the third combiner, and the port 3 of the second combiner is connected to the port 4 of the fourth combiner;

the port 3 of the third combiner is connected to the first antenna unit, and the port 4 of the third combiner is connected to the second antenna unit; the port 2 of the fourth combiner is connected to the third antenna unit, and the port 4 of the fourth combiner is connected to the fourth antenna unit; and

the two radio frequency ports include: one of the port 1 of the first combiner and the port 4 of the first combiner, and one of the port 1 of the second combiner and the port 4 of the second combiner.

With reference to the twelfth possible implementation manner of the first aspect, in a thirteenth possible implementation manner of the first aspect, at least one of the first combiner and the second combiner is a 90° hybrid bridge.

With reference to the twelfth possible implementation manner of the first aspect or the thirteenth possible implementation manner of the first aspect, in a fourteenth possible implementation manner of the first aspect,

the third combiner is a 180° hybrid bridge;

or,

the third combiner includes a third hybrid bridge and a third phase shifter, where the third hybrid bridge is a 90° hybrid bridge, and the third phase shifter is a 90° phase shifter, where

a port 1 of the third hybrid bridge is used as the port 4 of the third combiner, a port 2 of the third hybrid bridge is used as the port 3 of the third combiner, a port 3 of the third hybrid bridge is used as the port 2 of the third combiner, one end of the third phase shifter is connected to a port 4 of the third hybrid bridge, and the other end of the third phase shifter is used as the port 1 of the third combiner, where

a scattering matrix of the third hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the twelfth possible implementation manner of the first aspect or the thirteenth possible implementation manner of the first aspect or the fourteenth possible implementation manner of the first aspect, in a fifteenth possible implementation manner of the first aspect, the fourth combiner is a 180° hybrid bridge;

or,

the fourth combiner includes a fourth hybrid bridge and a fourth phase shifter, where the fourth hybrid bridge is a 90° hybrid bridge, and the fourth phase shifter is a 90° phase shifter, where

a port 2 of the fourth hybrid bridge is used as the port 2 of the fourth combiner, a port 3 of the fourth hybrid bridge is used as the port 3 of the fourth combiner, a port 4 of the fourth hybrid bridge is used as the port 4 of the fourth combiner, one end of the fourth phase shifter is connected to a port 1 of the fourth hybrid bridge, and the other end of the fourth phase shifter is used as the port 1 of the fourth combiner, where

a scattering matrix of the fourth hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a sixteenth possible implementation manner of the first aspect,

the N antenna units include: a first antenna unit, a second antenna unit, a third antenna unit, and a fourth antenna unit; and the feeding network includes: a first combiner, a second combiner, a third combiner, and a fourth combiner, where

a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; the port 1 of the first combiner is connected to the port 4 of the third combiner, and the port 4 of the first combiner is connected to the port 1 of the fourth combiner; the port 2 of the second combiner is connected to the port 1 of the third combiner, and the port 3 of the second combiner is connected to the port 4 of the fourth combiner;

the port 3 of the third combiner is connected to the first antenna unit, and the port 2 of the third combiner is connected to the second antenna unit; the port 2 of the fourth combiner is connected to the third antenna unit, and the port 3 of the fourth combiner is connected to the fourth antenna unit; and

the two radio frequency ports include: one of the port 2 of the first combiner and the port 3 of the first combiner, and one of the port 1 of the second combiner and the port 4 of the second combiner.

With reference to the sixteenth possible implementation manner of the first aspect, in a seventeenth possible implementation manner of the first aspect, at least one of the second combiner and the fourth combiner is a 90° hybrid bridge.

With reference to the sixteenth possible implementation manner of the first aspect or the seventeenth possible implementation manner of the first aspect, in an eighteenth possible implementation manner of the first aspect,

the third combiner is a 180° hybrid bridge;

or, the third combiner includes a third hybrid bridge and a third phase shifter where the third hybrid bridge is a 90° hybrid bridge, and the third phase shifter is a 90° phase shifter, where

a port 1 of the third hybrid bridge is used as the port 4 of the third combiner, a port 2 of the third hybrid bridge is used as the port 3 of the third combiner, a port 3 of the third hybrid bridge is used as the port 2 of the third combiner, one end of the third phase shifter is connected to a port 4 of the third hybrid bridge, and the other end of the third phase shifter is used as the port 1 of the third combiner, where

a scattering matrix of the third hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the sixteenth possible implementation manner of the first aspect or the seventeenth possible implementation manner of the first aspect or the eighteenth possible implementation manner of the first aspect, in a nineteenth possible implementation manner of the first aspect, the first combiner is a 180° hybrid bridge;
or,
the first combiner includes a first hybrid bridge and a first phase shifter, where the first hybrid bridge is a 90° hybrid bridge, and the first phase shifter is a 90° phase shifter, where
a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, where
a scattering matrix of the first hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twentieth possible implementation manner of the first aspect,
the N antenna units include: a first antenna unit, a second antenna unit, a third antenna unit, and a fourth antenna unit; and the feeding network includes: a first combiner, a second combiner, a third combiner, and a fourth combiner, where
a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

where

an element $s_{ij}$ in a scattering matrix represents an ideal scattering coefficient from input at a port j to output at a port i; the port 4 of the first combiner is connected to the port 1 of the third combiner, and the port 1 of the first combiner is connected to the port 4 of the fourth combiner; the port 2 of the second combiner is connected to the port 4 of the third combiner, and the port 3 of the second combiner is connected to the port 1 of the fourth combiner; the port 2 of the third combiner is connected to the first antenna unit, and the port 3 of the third combiner is connected to the second antenna unit; the port 3 of the fourth combiner is connected to the third antenna unit, and the port 2 of the fourth combiner is connected to the fourth antenna unit; and the two radio frequency ports include: one of the port 3 of the first combiner and the port 2 of the first combiner, and one of the port 1 of the second combiner and the port 4 of the second combiner.

With reference to the twentieth possible implementation manner of the first aspect, in a twenty-first possible implementation manner of the first aspect, at least one of the second combiner and the third combiner is a 90° hybrid bridge.

With reference to the twentieth possible implementation manner of the first aspect or the twenty-first possible implementation manner of the first aspect, in a twenty-second possible implementation manner of the first aspect, the first combiner is a 180° hybrid bridge;

or,

the first combiner includes a first hybrid bridge and a first phase shifter where the first hybrid bridge is a 90° hybrid bridge, and the first phase shifter is a 90° phase shifter, where

a port 1 of the first hybrid bridge is used as the port 3 of the first combiner, a port 4 of the first hybrid bridge is used as the port 2 of the first combiner, a port 2 of the first hybrid bridge is used as the port 4 of the first combiner, one end of the first phase shifter is connected to a port 3 of the first hybrid bridge, and the other end of the first phase shifter is used as the port 1 of the first combiner, where

a scattering matrix of the first hybrid bridge is $[S_{90}]$, where

$$\left[S_{90}\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix}.$$

With reference to the twentieth possible implementation manner of the first aspect or the twenty-first possible implementation manner of the first aspect or the twenty-second possible implementation manner of the first aspect, in a twenty-third possible implementation manner of the first aspect, the fourth combiner is a 180° hybrid bridge;

or,

the fourth combiner includes a fourth hybrid bridge and a fourth phase shifter where the fourth hybrid bridge is a 90° hybrid bridge, and the fourth phase shifter is a 90° phase shifter, where

a port 1 of the fourth hybrid bridge is used as the port 4 of the fourth combiner, a port 2 of the fourth hybrid bridge is used as the port 3 of the fourth combiner, a port 3 of the fourth hybrid bridge is used as the port 2 of the fourth combiner, one end of the fourth phase shifter is connected to a port 4 of the fourth hybrid bridge, and the other end of the fourth phase shifter is used as the port 1 of the fourth combiner, where
a scattering matrix of the fourth hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twenty-fourth possible implementation manner of the first aspect,
the N antenna units include:

a first antenna unit, a second antenna unit, a third antenna unit, and a fourth antenna unit; and
the feeding network includes: a first combiner, a second combiner, a third combiner, and a fourth combiner, where a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where
an element $s_{ij}$ in a scattering matrix represents an ideal scattering coefficient from input at a port j to output at a port i; the port 2 of the first combiner is connected to the port 1 of the third combiner, and the port 3 of the first combiner is connected to the port 1 of the fourth combiner; the port 2 of the second combiner is connected to the port 4 of the third combiner, and the port 3 of the second combiner is connected to the port 4 of the fourth combiner;
the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and
the two radio frequency ports include: the port 1 of the first combiner and the port 1 of the second combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twenty-fifth possible implementation manner of the first aspect,
the N antenna units include:

a first antenna unit, a second antenna unit, a third antenna unit, and a fourth antenna unit; and
the feeding network includes: a first combiner, a second combiner, a third combiner, and a fourth combiner, where a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^2\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

where
an element $s_{ij}$ in a scattering matrix represents an ideal scattering coefficient from input at a port $j$ to output at a port $i$;
the port 3 of the first combiner is connected to the port 1 of the third combiner, and the port 2 of the first combiner is connected to the port 1 of the fourth combiner; the port 2 of the second combiner is connected to the port 4 of the third combiner, and the port 3 of the second combiner is connected to the port 4 of the fourth combiner;
the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports include: the port 1 of the first combiner and the port 1 of the second combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twenty-sixth possible implementation manner of the first aspect,
the N antenna units include:

a first antenna unit, a second antenna unit, a third antenna unit, and a fourth antenna unit; and
the feeding network includes: a first combiner, a second combiner, a third combiner, and a fourth combiner, where a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^2\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

where
an element $s_{ij}$ in a scattering matrix represents an ideal scattering coefficient from input at a port j to output at a port i; the port 2 of the first combiner is connected to the port 1 of the third combiner, and the port 3 of the first combiner is connected to the port 1 of the fourth combiner; the port 3 of the second combiner is connected to the port 4 of the third combiner, and the port 2 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and
the two radio frequency ports include: the port 1 of the first combiner and the port 1 of the second combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twenty-seventh possible implementation manner of the first aspect,
the N antenna units include:

a first antenna unit, a second antenna unit, a third antenna unit, and a fourth antenna unit; and
the feeding network includes: a first combiner, a second combiner, a third combiner, and a fourth combiner, where a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^2\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

where
an element $s_{ij}$ in a scattering matrix represents an ideal scattering coefficient from input at a port j to output at a port i; the port 3 of the first combiner is connected to the port 1 of the third combiner, and the port 2 of the first combiner is connected to the port 1 of the fourth combiner; the port 3 of the second combiner is connected to the port 4 of the third combiner, and the port 2 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports include: the port 1 of the first combiner and the port 1 of the second combiner.

With reference to the twenty-fourth possible implementation manner of the first aspect or the twenty-fifth possible implementation manner of the first aspect or the twenty-sixth possible implementation manner of the first aspect or the twenty-seventh possible implementation manner of the first aspect, in a twenty-eighth possible implementation manner of the first aspect,
the first combiner is a first balun, where a combiner end of the first balun is used as the port 1 of the first combiner, an in-phase end of the first balun is used as the port 2 of the first combiner, and an out-phase end of the first balun is used as the port 3 of the first combiner;
or,

the first combiner includes a first power divider and a fifth phase shifter, where a combiner end of the first power divider is used as the port 1 of the first combiner, a first divider end of the first power divider is used as the port 2 of the first combiner, one end of the fifth phase shifter is connected to a second divider end of the first power divider, and the other end of the fifth phase shifter is used as the port 3 of the first combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a twenty-ninth possible implementation manner of the first aspect,

the N antenna units include: a first antenna unit, a second antenna unit, a third antenna unit, and a fourth antenna unit; and the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; the port 1 of the first combiner is connected to the port 1 of the third combiner, and the port 4 of the first combiner is connected to the port 1 of the fourth combiner; the port 2 of the second combiner is connected to the port 4 of the third combiner, and the port 3 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports include: one of the port 2 of the first combiner and the port 3 of the first combiner, and the port 1 of the second combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a thirtieth possible implementation manner of the first aspect,

the N antenna units include: a first antenna unit, a second antenna unit, a third antenna unit, and a fourth antenna unit; and the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$,

where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; the port 1 of the first combiner is connected to the port 1 of the third combiner, and the port 4 of the first combiner is connected to the port 1 of the fourth combiner; the port 3 of the second combiner is connected to the port 4 of the third combiner, and the port 2 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports include: one of the port 2 of the first combiner and the port 3 of the first combiner, and the port 1 of the second combiner.

With reference to the twenty-ninth possible implementation manner of the first aspect or the thirtieth possible implementation manner of the first aspect, in a thirty-first possible implementation manner of the first aspect,

the first combiner is a 180° hybrid bridge; or,

the first combiner includes a first hybrid bridge and a first phase shifter, where the first hybrid bridge is a 90° hybrid bridge, and the first phase shifter is a 90° phase shifter, where

a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, where

a scattering matrix of the first hybrid bridge is $[S_{90}]$, where

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a thirty-second possible implementation manner of the first aspect,

the N antenna units include: a first antenna unit, a second antenna unit, a third antenna unit, and a fourth antenna unit; and the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$,

where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; the port 4 of the first combiner is connected to the port 1 of the third combiner, and the port 1 of the first combiner is connected to the port 1 of the fourth combiner; the port 2 of the second combiner is connected to the port 4 of the third combiner, and the port 3 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports include: one of the port 2 of the first combiner and the port 3 of the first combiner, and the port 1 of the second combiner.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a thirty-third possible implementation manner of the first aspect, the N antenna units include: a first antenna unit, a second antenna unit, a third antenna unit, and a fourth antenna unit; and the feeding network includes: a first combiner, a second combiner, a third combiner, and a fourth combiner, where a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; the port 4 of the first combiner is connected to the port 1 of the third combiner, the port 1 of the first combiner is connected to the port 1 of the fourth combiner; the port 3 of the second combiner is connected to the port 4 of the third combiner, the port 2 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports include: one of the port 2 of the first combiner and the port 3 of the first combiner, and the port 1 of the second combiner.

With reference to the thirty-second possible implementation manner of the first aspect or the thirty-third possible implementation manner of the first aspect, in a thirty-fourth possible implementation manner of the first aspect, the first combiner is a 180° hybrid bridge; or, the first combiner includes a first hybrid bridge and a first phase shifter, where the first hybrid bridge is a 90° hybrid bridge, and the first phase shifter is a 90° phase shifter,where a port 1 of the first hybrid bridge is used as the port 3 of the first combiner, a port 4 of the first hybrid bridge is used as the port 2 of the first combiner, a port 2 of the first hybrid bridge is used as the port 4 of the first combiner, one end of the first phase shifter is connected to a port 3 of the first hybrid bridge, and the other end of the first phase shifter is used as the port 1 of the first combiner, where a scattering matrix of the first hybrid bridge is $[S_{90}]$, where

$$\left[S_{90}\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

With reference to the twenty-fourth possible implementation manner of the first aspect or the twenty-fifth possible implementation manner of the first aspect or the twenty-sixth possible implementation manner of the first aspect or the twenty-seventh possible implementation manner of the first aspect or the twenty-eighth possible implementation manner of the first aspect or the twenty-ninth possible implementation manner of the first aspect or the thirtieth possible implementation manner of the first aspect or the thirty-first possible implementation manner of the first aspect or the thirty-second possible implementation manner of the first aspect or the thirty-third possible implementation manner of the first aspect or the thirty-fourth possible implementation manner of the first aspect, in a thirty-fifth possible implementation manner of the first aspect, at least one of the third combiner and the fourth combiner is a 90° hybrid bridge.

With reference to the twenty-fourth possible implementation manner of the first aspect or the twenty-fifth possible implementation manner of the first aspect or the twenty-sixth possible implementation manner of the first aspect or the twenty-seventh possible implementation manner of the first aspect or the twenty-eighth possible implementation manner of the first aspect or the twenty-ninth possible implementation manner of the first aspect or the thirtieth possible implementation manner of the first aspect or the thirty-first possible implementation manner of the first aspect or the thirty-second possible implementation manner of the first aspect or the thirty-third possible implementation manner of the first aspect or the thirty-fourth possible implementation manner of the first aspect or the thirty-fifth possible implementation manner of the first aspect, in a thirty-sixth possible implementation manner of the first aspect, the second combiner is a second balun, where a combiner end of the second balun is used as the port 1 of the second combiner, an in-phase end of the second balun is used as the port 2 of the second combiner, and an out-phase end of the second balun is used as the port 3 of the second combiner;

or,

the second combiner includes a second power divider and a sixth phase shifter, where a combiner end of the second power divider is used as the port 1 of the second combiner, a second divider end of the second power divider is used as the port 2 of the second combiner, one end of the sixth phase shifter is connected to a second divider end of the second power divider, and the other end of the sixth phase shifter is used as the port 3 of the second combiner.

It can be seen that in the technical solutions, in some embodiments of the present invention, a feeding network and an antenna array are introduced in a wireless communications device, where the feeding network can perform power distribution and phase shifting on a radio frequency signal to be transmitted, N antenna units transmits N radio frequency signals obtained after power distribution and phase shifting are performed by the feeding network, and phases of the N radio frequency signals are mutually unequal; two transceivers, corresponding to different communications standards, of the wireless communications device may implement sharing of the antenna array by using the feeding network, thereby helping to reduce a fabrication cost of a wireless communications device in a scenario of supporting at least two communications standards.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

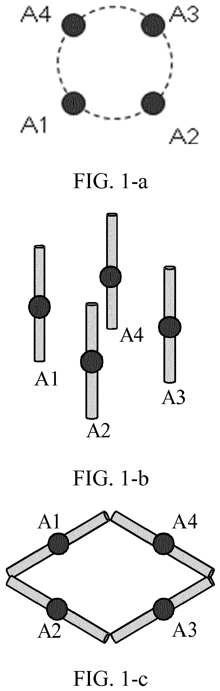

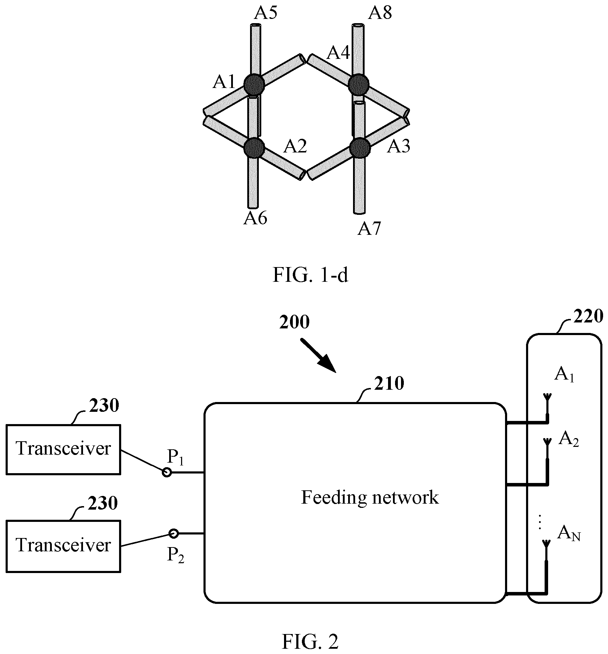

FIG. 1-a is a schematic diagram of arrangement of antenna units in an annular omnidirectional antenna array according to an embodiment of the present invention;

FIG. 1-b is a schematic diagram of arrangement of antenna units in another annular omnidirectional antenna array according to an embodiment of the present invention;

FIG. 1-c is a schematic diagram of arrangement of antenna units in another annular omnidirectional antenna array according to an embodiment of the present invention;

FIG. 1-d is a schematic diagram of arrangement of antenna units in another annular omnidirectional antenna array according to an embodiment of the present invention;

FIG. 2 is a schematic diagram of an overall architecture of a wireless communications device according to an embodiment of the present invention;

FIG. 3-a is a schematic diagram of a partial structure of a wireless communications device according to an embodiment of the present invention;

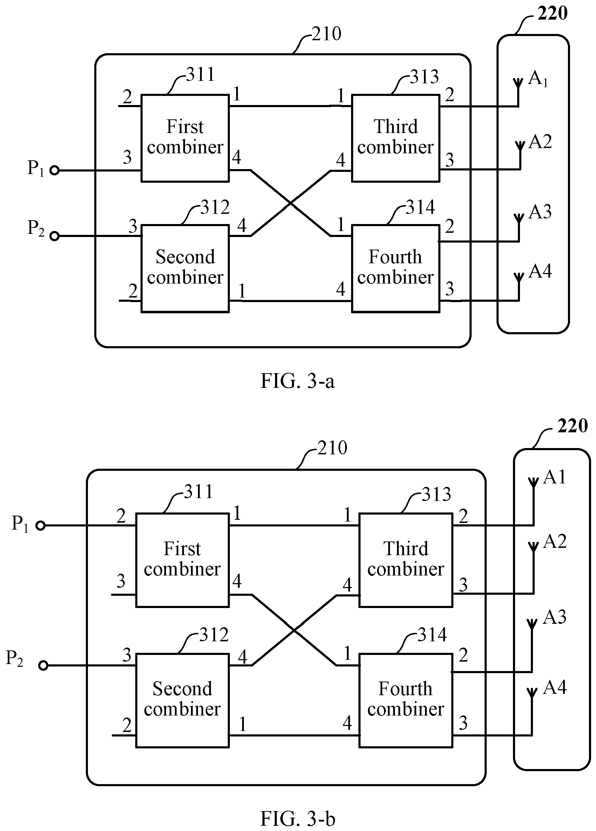

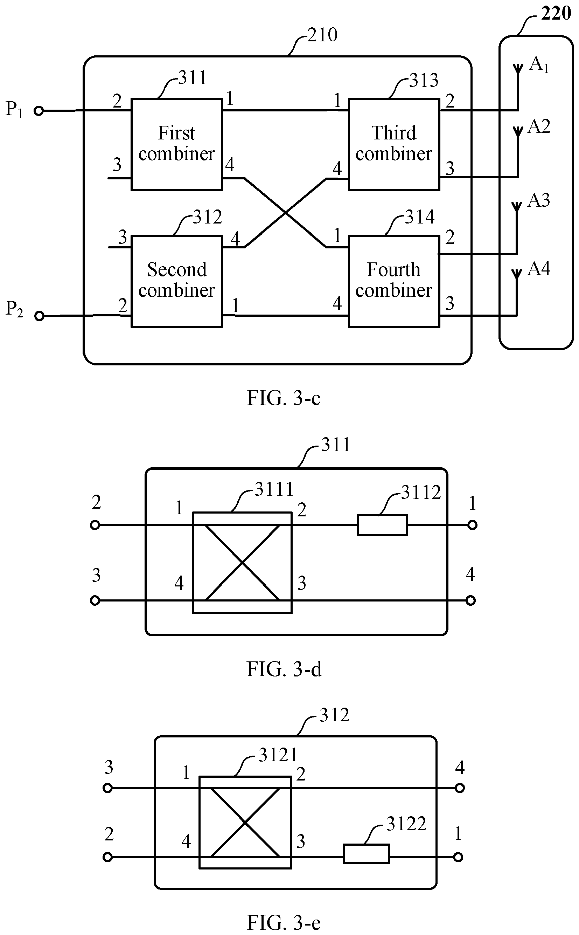

FIG. 3-b is a schematic diagram of a partial structure of another wireless communications device according to an embodiment of the present invention;

FIG. 3-c is a schematic diagram of a partial structure of another wireless communications device according to an embodiment of the present invention;

FIG. 3-d is a schematic structural diagram of a first combiner according to an embodiment of the present invention;

FIG. 3-e is a schematic structural diagram of a second combiner according to an embodiment of the present invention;

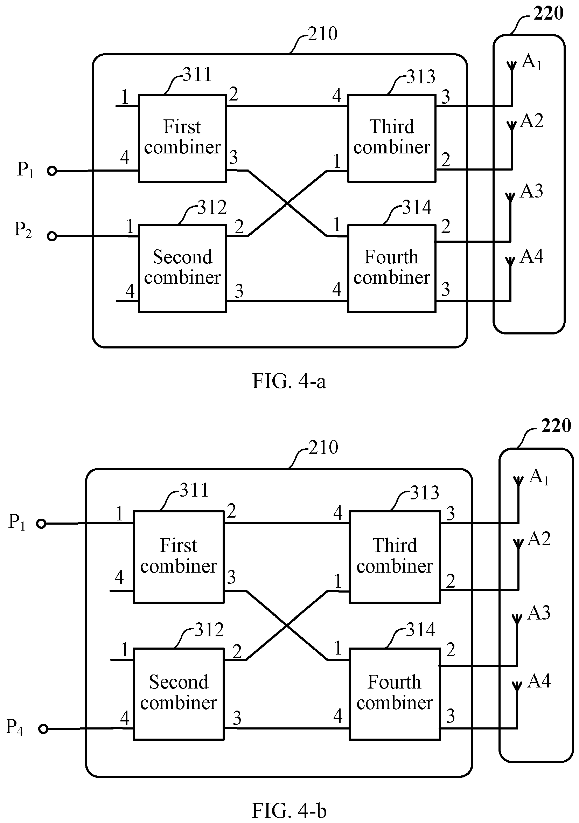

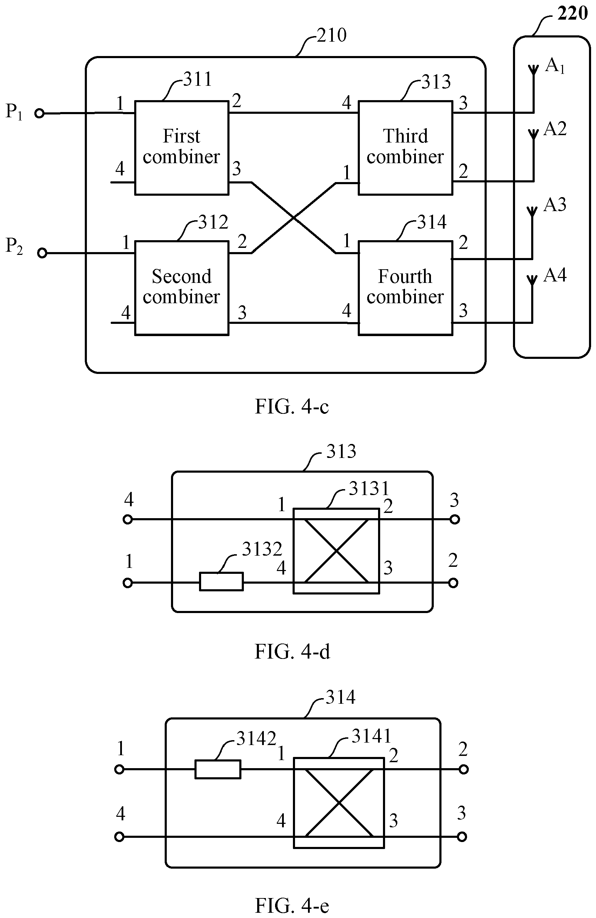

FIG. 4-a is a schematic diagram of a partial structure of another wireless communications device according to an embodiment of the present invention;

FIG. 4-b is a schematic diagram of a partial structure of another wireless communications device according to an embodiment of the present invention;

FIG. 4-c is a schematic diagram of a partial structure of another wireless communications device according to an embodiment of the present invention;

FIG. 4-d is a schematic structural diagram of a third combiner according to an embodiment of the present invention;

FIG. 4-e is a schematic structural diagram of a fourth combiner according to an embodiment of the present invention;

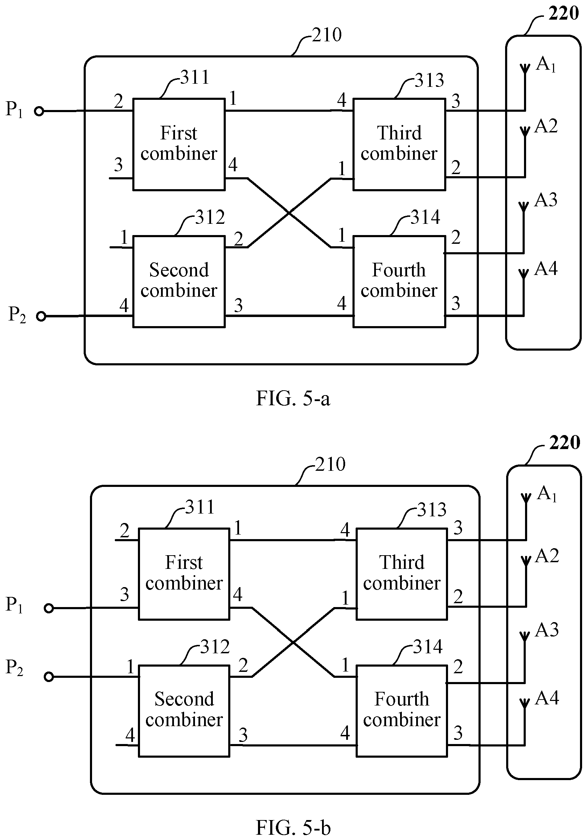

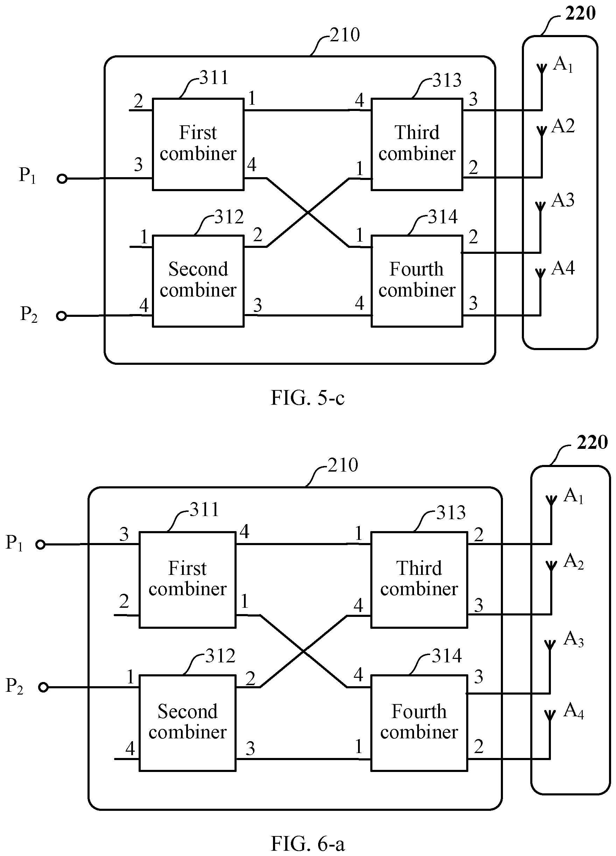

FIG. 5-a is a schematic diagram of a partial structure of another wireless communications device according to an embodiment of the present invention;

FIG. 5-b is a schematic diagram of a partial structure of another wireless communications device according to an embodiment of the present invention;

FIG. 5-c is a schematic diagram of a partial structure of another wireless communications device according to an embodiment of the present invention;

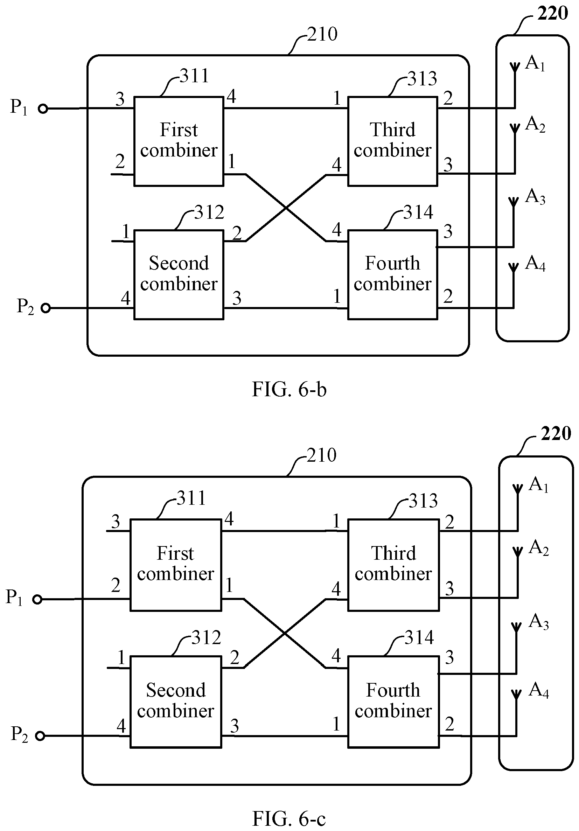

FIG. 6-a is a schematic diagram of a partial structure of another wireless communications device according to an embodiment of the present invention;

FIG. 6-b is a schematic diagram of a partial structure of another wireless communications device according to an embodiment of the present invention;

FIG. 6-c is a schematic diagram of a partial structure of another wireless communications device according to an embodiment of the present invention;

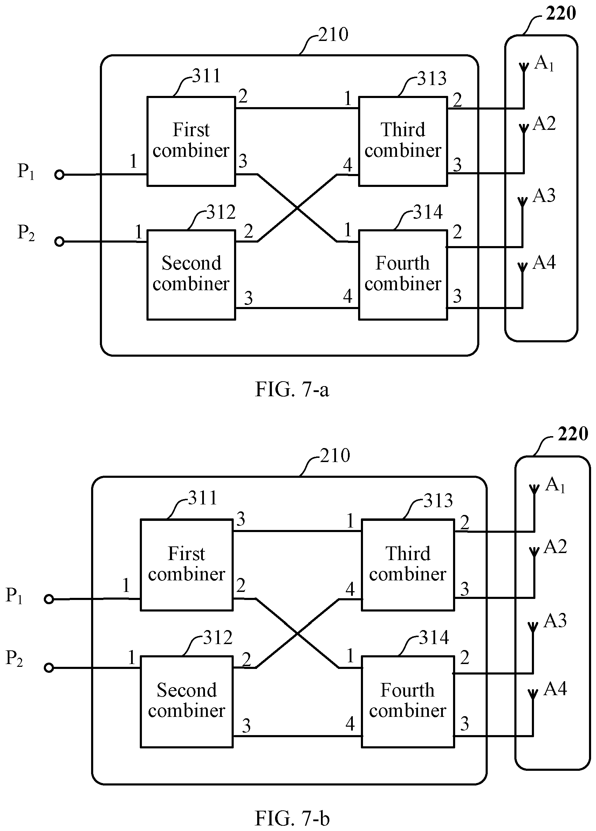

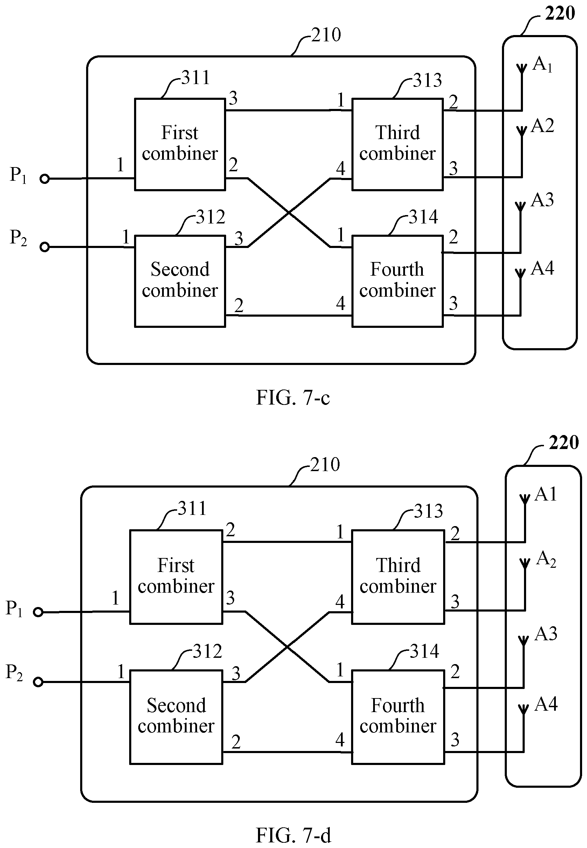

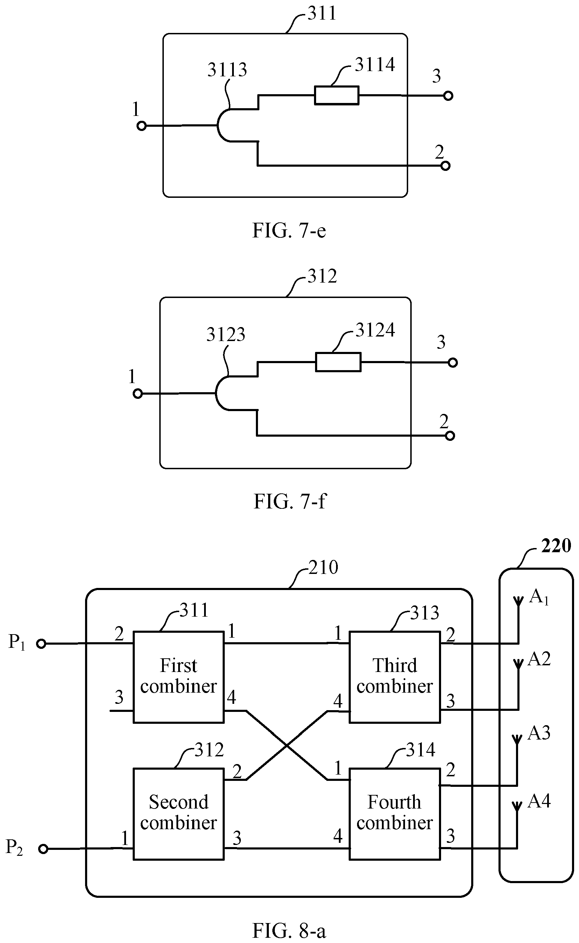

FIG. 7-a is a schematic diagram of a partial structure of another wireless communications device according to an embodiment of the present invention;

FIG. 7-b is a schematic diagram of a partial structure of another wireless communications device according to an embodiment of the present invention;

FIG. 7-c is a schematic diagram of a partial structure of another wireless communications device according to an embodiment of the present invention;

FIG. 7-d is a schematic diagram of a partial structure of another wireless communications device according to an embodiment of the present invention;

FIG. 7-e is a schematic structural diagram of another first combiner according to an embodiment of the present invention;

FIG. 7-f is a schematic structural diagram of another second combiner according to an embodiment of the present invention;

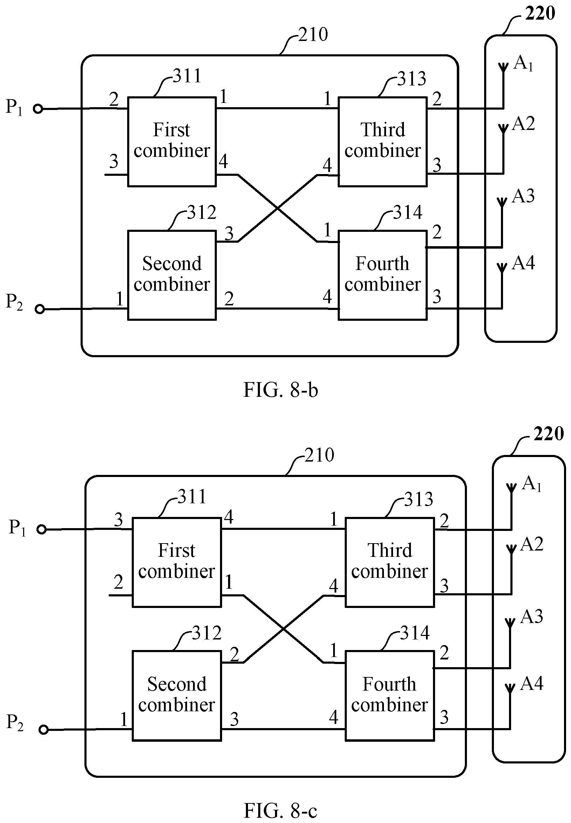

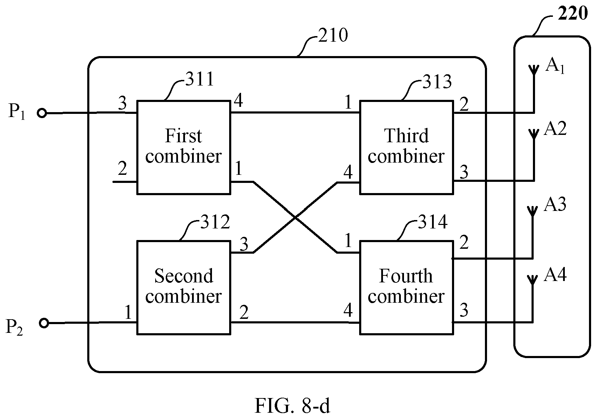

FIG. 8-a is a schematic diagram of a partial structure of another wireless communications device according to an embodiment of the present invention;

FIG. 8-b is a schematic diagram of a partial structure of another wireless communications device according to an embodiment of the present invention;

FIG. 8-c is a schematic diagram of a partial structure of another wireless communications device according to an embodiment of the present invention;

FIG. 8-d is a schematic diagram of a partial structure of another wireless communications device according to an embodiment of the present invention;

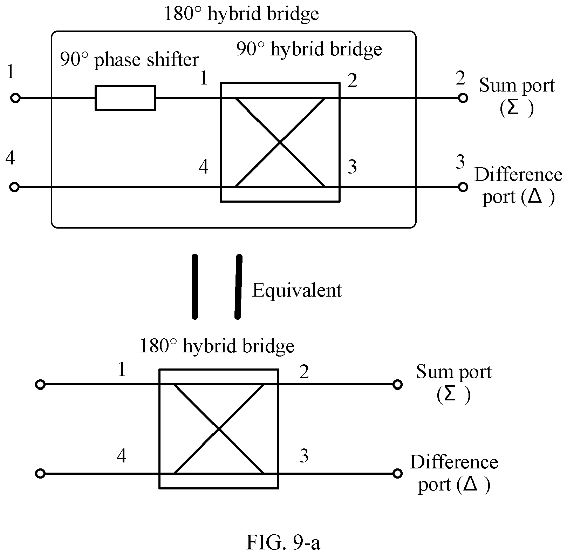

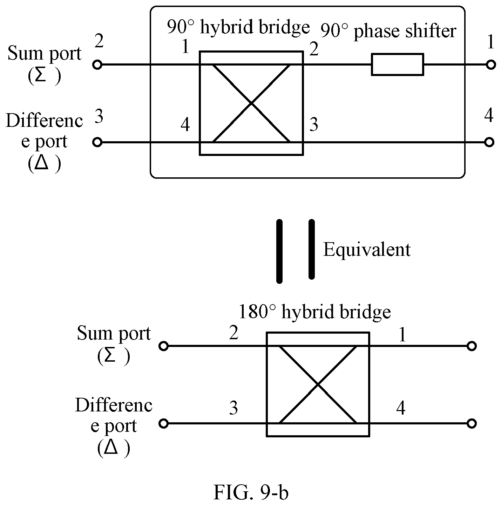

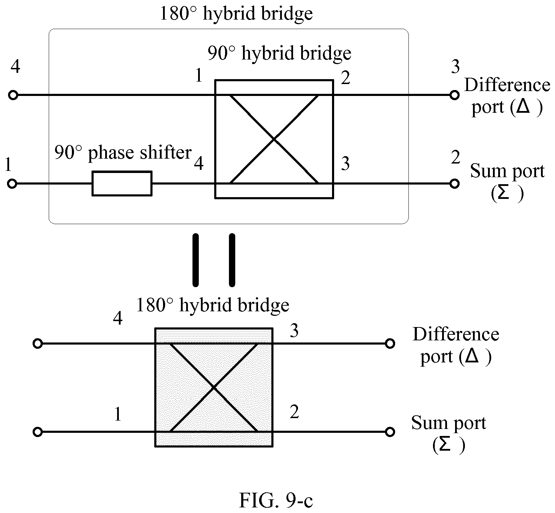

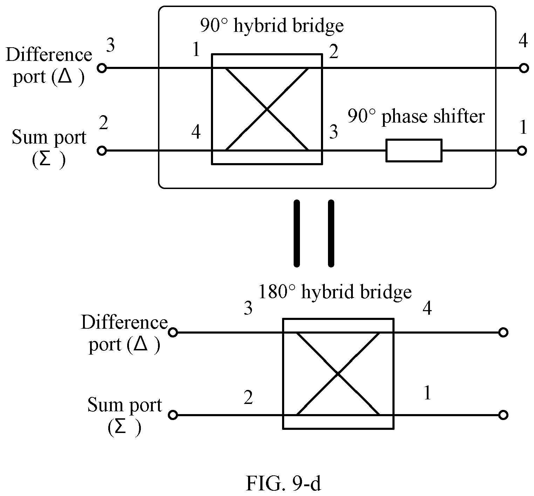

FIG. 9-a is a diagram of an equivalent relationship between a 90° hybrid bridge and a 180° hybrid bridge according to an embodiment of the present invention;

FIG. 9-b is a diagram of an equivalent relationship between another 90° hybrid bridge and a 180° hybrid bridge according to an embodiment of the present invention;

FIG. 9-c is a diagram of an equivalent relationship between another 90° hybrid bridge and a 180° hybrid bridge according to an embodiment of the present invention; and

FIG. 9-d is a diagram of an equivalent relationship between another 90° hybrid bridge and a 180° hybrid bridge according to an embodiment of the present invention.

## DESCRIPTION OF EMBODIMENTS

Embodiments of the present invention provide a wireless communications device to reduce a fabrication cost of a wireless communications device in a scenario of supporting at least two communications standards.

To make the objectives, features, and advantages of the present invention clearer and more comprehensible, the following describes the technical solutions in the embodiments of the present invention with reference to the accompanying drawings in the embodiments of the present invention. Apparently, the described embodiments are only a part rather than all of the embodiments of the present invention of the invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on are intended to distinguish between different objects but do not necessarily indicate a specific order. In addition, the terms "include", "have", or any other variant thereof, are intended to cover a non-exclusive inclusion. For example, a process, method, system, product, or device that includes a series of steps or units is not limited to the expressly listed steps or units, but may optionally include other steps or units which are not expressly listed or optionally include other steps or units which are inherent to the process, method, product, or device.

Detailed description is provided separately below with reference to specific embodiments.

An embodiment of the present invention provides a wireless communications device, which may include: a feeding network, two transceivers, and an antenna array including N antenna units.

The feeding network may have N antenna ports and two radio frequency ports, and the N antenna ports are connected to the N antenna units in a one-to-one correspondence, where N is an integer greater than 2.

The two transceivers are connected to the two radio frequency ports in a one-to-one correspondence, and communications standards of radio frequency signals output by the two transceivers to the two radio frequency ports are different from each other. The communications standards of the radio frequency signals output by the two transceivers to the two radio frequency ports may be, for example, two of the following communications standards: GSM, WCDMA, and LTE. Certainly, the communications standards of the radio frequency signals output by the two transceivers to the two radio frequency ports may also be, for example, other communications standards.

The feeding network is configured to perform power distribution and phase shifting on a radio frequency signal input from any one radio frequency port in the two radio frequency ports to the feeding network, to obtain N radio frequency signals, and output the N radio frequency signals to the N antenna units through the N antenna ports for transmission, where the N radio frequency signals and the N antenna ports are in a one-to-one correspondence.

Phases of the N radio frequency signals are mutually unequal, and a difference in phases of two radio frequency signals, transmitted by any two adjacent antenna units in the N antenna units, in the N radio frequency signals is equal to K*360°/N, where K is a positive integer.

For example, N may be equal to 2, 3, 4, 5, 8 or another value.

For example, N may be an nth (n being a natural number) power of 2.

For example, K may be equal to 1, 2, 4, 8 or another value.

In some embodiments of the present invention, at least one antenna unit in the N antenna units may be a single antenna or an antenna subarray. For example, each antenna unit in the N antenna units may be a single antenna or an antenna subarray, or some antenna units in the N antenna units are single antennas, and some other antenna units are antenna subarrays.

The antenna array may be a non-omnidirectional antenna array or an omnidirectional antenna array, specifically, for example, an annular omnidirectional antenna array or another type of omnidirectional antenna array. For example, the antenna array may be, for example, a horizontal-plane omnidirectional antenna array (for example, a vertically-polarized horizontal-plane omnidirectional antenna array or a horizontally-polarized horizontal-plane omnidirectional antenna array or a vertically and horizontally-polarized horizontal-plane omnidirectional antenna array) or a vertical-plane omnidirectional antenna array (for example, a vertically-polarized vertical-plane omnidirectional antenna array or a horizontally-polarized vertical-plane omnidirectional antenna array or a vertically and horizontally-polarized vertical-plane omnidirectional antenna array), and certainly the antenna array may also be another omnidirectional antenna array.

It can be seen that, the wireless communications device in this embodiment includes a feeding network and an antenna array including N antenna units. The feeding network and the antenna array that coordinate with each other are introduced, where the feeding network can perform power distribution and phase shifting on a radio frequency signal to be transmitted, the N antenna units transmit N radio frequency signals obtained after power distribution and phase shifting are performed by the feeding network, and phases of the N radio frequency signals are mutually unequal; two transceivers, corresponding to different communications standards, of the wireless communications device may implement sharing of the antenna array by using the feeding network, thereby helping to reduce a fabrication cost of a wireless communications device in a scenario of supporting at least two communications standards.

Furthermore, if the antenna array is an omnidirectional antenna array (for example, an annular omnidirectional antenna array), a difference in phases of two radio frequency signals, transmitted by any two adjacent antenna units in the N antenna units, in the N radio frequency signals is equal to K*360°/N, which helps to obtain a more desirable omnidirectional pattern on a specified plane (for example, a horizontal plane or a vertical plane), thereby further helping to implement more desirable omnidirectional coverage on a specified plane (for example, a horizontal plane or a vertical plane).

Furthermore, the feeding network may be further configured to perform power combination and phase shifting on radio frequency signals received by the N antennas and then output to the two radio frequency ports.

The feeding network may further include other radio frequency ports in addition to the two radio frequency ports, the wireless communications device may further include other transceivers in addition to the two transceivers, and the other radio frequency ports and the other transceivers may be connected in a one-to-one correspondence.

In some embodiments of the present invention, feed points of the N antenna units in the antenna array may be located on a same ring. For example, as shown in FIG. 1-a, FIG. 1-a illustrates an example in which feed points of four antenna units located on a same ring form a structure of an omnidirectional antenna array.

For example, referring to FIG. 1-b, FIG. 1-b illustrates an example in which feed points of four antenna units located on a same ring form a structure of a vertically-polarized omnidirectional antenna array. Referring to FIG. 1-c, FIG. 1-c illustrates an example in which feed points of four antenna units located on a same ring form a structure of a horizontally-polarized omnidirectional antenna array. The examples of structures in FIG. 1-b and FIG. 1-c may also combined to obtain a horizontally and vertically-polarized omnidirectional antenna array shown in FIG. 1-d.

To better understand the solution in this embodiment of the present invention, detailed description is further provided below with reference to the accompanying drawings.

First, referring to FIG. 2, FIG. 2 shows a wireless communications device 200, which may include:

a feeding network 210, two transceivers 230, and an antenna array 220 including N antenna units. The feeding network 210 has N antenna ports and two radio frequency ports, and the N antenna ports are connected to the N antenna units in a one-to-one correspondence, where N is an integer greater than 2.

The two transceivers 230 are connected to the two radio frequency ports in a one-to-one correspondence, and communications standards of radio frequency signals output by the two transceivers 230 to the two radio frequency ports are different from each other.

The feeding network 210 is configured to perform power distribution and phase shifting on a radio frequency signal input from any one radio frequency port in the two radio frequency ports to the feeding network 210, to obtain N radio frequency signals, and output the N radio frequency signals to the N antenna units through the N antenna ports for transmission, where the N radio frequency signals and the N radio frequency ports are in a one-to-one correspondence.

Phases of the N radio frequency signals are mutually unequal.

Optionally, a difference in phases of two radio frequency signals, transmitted by any two adjacent antenna units in the N antenna units, in the N radio frequency signals is equal to K*360°/N, where K is a positive integer.

For example, the antenna array 220 may be a non-omnidirectional antenna array or an omnidirectional antenna array, specifically, for example, an annular omnidirectional antenna array or another type of omnidirectional antenna array. For example, the antenna array 220 may be, for example, a horizontal-plane omnidirectional antenna array (for example, a vertically-polarized horizontal-plane omnidirectional antenna array or a horizontally-polarized horizontal-plane omnidirectional antenna array or a vertically and horizontally-polarized horizontal-plane omnidirectional antenna array) or a vertical-plane omnidirectional antenna array (for example, a vertically-polarized vertical-plane omnidirectional antenna array or a horizontally-polarized vertical-plane omnidirectional antenna array or a vertically and horizontally-polarized vertical-plane omnidirectional antenna array), and certainly the antenna array 220 may also be another omnidirectional antenna array.

Distances between the N antenna units of the antenna array 220 may be within one wavelength.

The feeding network 210 may have various specific structures. For example, the feeding network 210 may include multiple combiners, where the combiners may include a hybrid bridge, a balun, a power divider, a phase shifter, and the like. Certainly, the feeding network 210 may further include some other devices.

In some embodiments of the present invention, the feeding network 210 may include:

a first combiner, a second combiner, a third combiner, and a fourth combiner, where

a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$
\begin{bmatrix} S^4 \end{bmatrix} = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},
$$

where

an element $s_{ij}$ in a scattering matrix represents an ideal scattering coefficient from input at a port j to output at a port i; and

a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;

or,

a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;

or,

a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

In some other embodiments of the present invention, the feeding network 210 may include:

a first combiner, a second combiner, a third combiner, and a fourth combiner, where a scattering matrix among a port 1, a port 2, a port 3, and a port 4 of the second combiner is [$S^2$], a scattering matrix among a port 1, a port 2, a port 3, and a port 4 of the third combiner is [$S^3$], a scattering matrix among a port 1, a port 2, a port 3, and a port 4 of the fourth combiner is [$S^4$], and a scattering matrix among a port 1, a port 2, and a port 3 of the first combiner is [$S^1$],

where

$$
\begin{bmatrix} S^1 \end{bmatrix} = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},
$$

$$
\begin{bmatrix} S^2 \end{bmatrix} = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},
$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

where

an element $s_{ij}$ in a scattering matrix represents an ideal scattering coefficient from input at a port j to output at a port i; and

a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;

or,

a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;

or,

a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

Some optional structures of the feeding network 210 are described below by using examples with reference to the accompanying drawings.

Referring to FIG. 3-a to FIG. 3-c, FIG. 3-a to FIG. 3-c illustrate an example in which several wireless communications devices have a multi-port four-antenna architecture. As shown in FIG. 3-a to FIG. 3-c, the N antenna units in the antenna array 220 specifically include: a first antenna unit A1, a second antenna unit A2, a third antenna unit A3, and a fourth antenna unit A4.

For example, as shown in FIG. 3-a to FIG. 3-c, the feeding network 210 may include a first combiner 311, a second combiner 312, a third combiner 313, and a fourth combiner 314.

In some embodiments of the present invention, a scattering matrix among a port 1, a port 2, a port 3, and a port 4 of the first combiner 311 may be $[S^1]$, a scattering matrix among a port 1, a port 2, a port 3, and a port 4 of the second combiner 312 may be $[S^2]$, a scattering matrix among a port 1, a port 2, a port 3, and a port 4 of the third combiner 313 may be $[S^3]$, and a scattering matrix among a port 1, a port 2, a port 3, and a port 4 of the fourth combiner 314 may be $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

In the embodiments of the present invention, an element $s_{ij}$ in a scattering matrix represents an ideal scattering coefficient from input at a port j to output at a port i. For example, $s_{12}$ in the scattering matrix $[S^1]$ represents an ideal scattering coefficient from input at the port 2 of the first combiner 311 to output at the port 1 of the first combiner 311. $s_{21}$ in the scattering matrix $[S^1]$ represents an ideal scattering coefficient from input at the port 1 of the first combiner 311 to output at the port 2 of the first combiner 311. $s_{24}$ in the scattering matrix $[S^2]$ represents an ideal scattering coefficient from input at the port 4 of the second combiner 312 to output at the port 2 of the second combiner 312. $s_{43}$ in the scattering matrix $[S^2]$ represents an ideal scattering coefficient from input at the port 3 of the second combiner 311 to output at the port 4 of the second combiner 311, and the like.

As shown in FIG. 3-a to FIG. 3-c, the port 1 of the first combiner 311 is connected to the port 1 of the third combiner 313, and the port 4 of the first combiner 311 is connected to the port 1 of the fourth combiner 314; the port 4 of the second combiner 312 is connected to the port 4 of the third combiner 313, and the port 1 of the second combiner 312 is connected to the port 4 of the fourth combiner 314.

The port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports may include: one of the port 2 of the first combiner 311 and the port 3 of the first combiner 311, and one of the port 2 of the second combiner 312 and the port 3 of the second combiner 312. FIG. 3-b illustrates an example in which the two radio frequency ports may include the port 2 of the first combiner 311 and the port 3 of the second combiner 312. FIG. 3-a illustrates an example in which the two radio frequency ports may include the port 3 of the first combiner 311 and the port 3 of the second combiner 312. FIG. 3-c illustrates an example in which the two radio frequency ports may include 3 ports such as the port 2 of the first combiner 311 and the port 3 of the second combiner 312.

In the architecture shown in FIG. 3-a, radio frequency signals separately input from the two radio frequency ports P1 and P2 to the feeding network 210 undergo power distribution and phase shifting by the feeding network 210 to obtain four radio frequency signals corresponding to four antenna units, and a phase relationship among the four radio frequency signals is shown in Table 1 below. A radio frequency signal 4 input from a radio frequency port P1 to the feeding network 210 undergoes power distribution and phase shifting by the feeding network 210 to obtain four radio frequency signals, phases of which are mutually unequal, and a difference in phases of two radio frequency signals, in the N radio frequency signals, transmitted by any two adjacent antenna units in the four antenna units is equal to 360°/N. A radio frequency signal 4 input from a radio frequency port P2 to the feeding network 210 undergoes power distribution and phase shifting by the feeding network 210 to obtain four radio frequency signals, phases of which are mutually unequal, and a difference in phases of two radio frequency signals, in the N radio frequency signals, transmitted by any two adjacent antenna units in the four antenna units is equal to 360°/N.

**Table 1**

|    | P1  | P2  |
|----|-----|-----|
| A1 | 180 | 90  |
| A2 | 270 | 0   |
| A3 | 0   | 270 |
| A4 | 90  | 180 |

In some embodiments of the present invention, at least one of the third combiner 313 and the fourth combiner 314 in the examples shown in FIG. 3-a to FIG. 3-c may be a 90° hybrid bridge.

A scattering matrix $[S_{90}]$ among a port 1, a port 2, a port 3, and a port 4 of the 90° hybrid bridge may be, for example, as follows:

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

Certainly, at least one of the third combiner 313 and the fourth combiner 314 in the examples shown in FIG. 3-a to FIG. 3-c may also be another type of combiner having the scattering matrix.

In some embodiments of the present invention, the first combiner 311 in the examples shown in FIG. 3-a to FIG. 3-c may be a 180° hybrid bridge.

A scattering matrix $[S_{180}]$ among a port 1, a port 2, a port 3, and a port 4 of the 180° hybrid bridge may be, for example, as follows:

$$[S_{180}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix}$$

In some other embodiments of the present invention, as shown in FIG. 3-d example, the first combiner 311 in the examples shown in FIG. 3-a to FIG. 3-c may include a first hybrid bridge 3111 and a first phase shifter 3112. The first hybrid bridge 3111 may be, for example, a 90° hybrid bridge, and the first phase shifter 3112 may be a 90° phase shifter. A port 1 of the first hybrid bridge 3111 is used as the port 2 of the first combiner 311, a port 4 of the first hybrid bridge 3111 is used as the port 3 of the first combiner 311, and a port 3 of the first hybrid bridge 3111 is used as the port 4 of the first combiner 311. One end of the first phase shifter 3112 is connected to a port 2 of the first hybrid bridge 3111, and the other end of the first phase shifter 3112 is used as the port 1 of the first combiner 311.

In some other embodiments of the present invention, as shown in the example in FIG. 3-e, the first combiner 312 in the examples shown in FIG. 3-a to FIG. 3-c may include a first hybrid bridge 3121 and a first phase shifter 3122. The first hybrid bridge 3121 may be, for example, a 90° hybrid bridge, and the first phase shifter 3122 is a 90° phase shifter. A port 1 of the second hybrid bridge 3121 is used as the port 3 of the second combiner 312, a port 4 of the second hybrid bridge 3121 is used as the port 2 of the second combiner 312, and a port 2 of the second hybrid bridge 3121 is used as the port 4 of the second combiner 312. One end of the second phase shifter 3122 is connected to a port 3 of the second hybrid bridge 3121, and the other end of the second phase shifter 3122 is used as the port 1 of the second combiner 312.

For another example, as shown in FIG. 4-a to FIG. 4-c, the feeding network 210 may include a first combiner 311, a second combiner 312, a third combiner 313, and a fourth combiner 314.

A scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, where

$$\left[S^1\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$\left[S^2\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix}$$

As shown in the examples in FIG. 4-a to FIG. 4-c, the port 2 of the first combiner 311 is connected to the port 4 of the third combiner 313, and the port 3 of the first combiner 311 is connected to the port 1 of the fourth combiner 314; the port 2 of the second combiner 312 is connected to the port 1 of the third combiner 313, and the port 3 of the second combiner 312 is connected to the port 4 of the fourth combiner 314.

As shown in the examples in FIG. 4-a to FIG. 4-c, the port 3 of the third combiner 313 is connected to the first antenna unit A1, and the port 4 of the third combiner 313 is connected to the second antenna unit A2; the port 2 of the fourth combiner 314 is connected to the third antenna unit A3, and the port 4 of the fourth combiner 314 is connected to the fourth antenna unit A4.

The two radio frequency ports of the feeding network 210 may include: one of the port 1 of the first combiner 311 and the port 4 of the first combiner 311, and one of the port 1 of the second combiner 312 and the port 4 of the second combiner 312. FIG. 4-a illustrates an example in which the two radio frequency ports of the feeding network 210 may include the port 4 of the first combiner 311 and the port 1 of the second combiner 312. FIG. 4-b illustrates an example in which the two radio frequency ports of the feeding network 210 may include: the port 1 of the first combiner 311 and the port 4 of the second combiner 312. FIG. 4-c illustrates an example in which the two radio frequency ports of the feeding network 210 may include the port 1 of the first combiner 311 and the port 1 of the second combiner 312. Certainly, the two radio frequency ports of the feeding network 210 may also include the port 4 of the first combiner 311 and the port 4 of the second combiner 312.

In some embodiments of the present invention, at least one of the first combiner 311 and the second combiner 312 in the examples shown in FIG. 4-a to FIG. 4-c may be a 90° hybrid bridge. Certainly, at least one of the first combiner 311 and the second combiner 312 in the examples shown in FIG. 4-a to FIG. 4-c may also be another type of combiner having the scattering matrix.

In some embodiments of the present invention, the third combiner 313 in the examples shown in FIG. 4-a to FIG. 4-c may be a 180° hybrid bridge. Alternatively, as shown in the example in FIG. 4-d, the third combiner 313 in the examples shown in FIG. 4-a to FIG. 4-c may include a third hybrid bridge 3131 and a third phase shifter 3132. The third hybrid bridge 3131 is a 90° hybrid bridge, and the third phase shifter 3133 is a 90° phase shifter. A port 1 of the third hybrid bridge 3131 is used as the port 4 of the third combiner 313, a port 2 of the third hybrid bridge 3131 is used as the port 3 of the third combiner 313, a port 3 of the third hybrid bridge 3131 is used as the port 2 of the third combiner 313, one end of the third phase shifter 3132 is connected to a port 4 of the third hybrid bridge 3131, and the other end of the third phase shifter 3132 is used as the port 1 of the third combiner 313.

In some embodiments of the present invention, the fourth combiner 314 in the examples shown in FIG. 4-a to FIG. 4-c is a 180° hybrid bridge. Alternatively, as shown in the example in FIG. 4-e, the fourth combiner 314 in the examples shown in FIG. 4-a to FIG. 4-c may include a fourth hybrid bridge 3141 and a fourth phase shifter 3142. The fourth hybrid bridge is a 90° hybrid bridge, and the fourth phase shifter 3142 is a 90° phase shifter. A port 2 of the fourth hybrid bridge 3141 is used as the port 2 of the fourth combiner 314, a port 3 of the fourth hybrid bridge 3141 is used as the port 3 of the fourth combiner 314, a port 4 of the fourth hybrid bridge 3141 is used as the port 4 of the fourth combiner 314, one end of the fourth phase shifter 3142 is connected to a port 1 of the fourth hybrid bridge 3141, and the other end of the fourth phase shifter 3142 is used as the port 1 of the fourth combiner 314.

In the architecture shown in FIG. 4-b, radio frequency signals separately input from the two radio frequency ports P1 and P2 to the feeding network 210 undergo power distribution and phase shifting by the feeding network 210 to obtain four radio frequency signals corresponding to four antenna units, and a phase relationship among the four radio frequency signals is shown in Table 2 below. A radio frequency signal 4 input from the radio frequency port P1 to the feeding network 210 undergoes power distribution and phase shifting by the feeding network 210 to obtain four radio frequency signals, phases of which are mutually unequal, and a difference in phases of two radio frequency signals, in the N radio frequency signals, transmitted by any two adjacent antenna units in the four antenna units is equal to 360°/N. A radio frequency signal 4 input from the radio frequency port P2 to the feeding network 210 undergoes power distribution and phase shifting by the feeding network 210 to obtain four radio frequency signals, phases of which are mutually unequal, and a difference in phases of two radio frequency signals, in the N radio frequency signals, transmitted by any two adjacent antenna units in the four antenna units is equal to 360°/N.

Table 2

|    | P1  | P2  |
|----|-----|-----|
| A1 | 0   | 270 |
| A2 | 90  | 180 |
| A3 | 180 | 90  |
| A4 | 270 | 0   |

For another example, as shown in FIG. 5-a to FIG. 5-e, the feeding network 210 may include: a first combiner 311, a second combiner 312, a third combiner 313, and a fourth combiner 314.

A scattering matrix among a port 1, a port 2, a port 3, and a port 4 of the first combiner 311 is $[S^1]$, a scattering matrix among a port 1, a port 2, a port 3, and a port 4 of the second combiner 312 is $[S^2]$, a scattering matrix among a port 1, a port 2, a port 3, and a port 4 of the third combiner 313 is $[S^3]$, and a scattering matrix among a port 1, a port 2, a port 3, and a port 4 of the fourth combiner 314 is $[S^4]$, where

$$\left[S^1\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix}$$

As shown in the examples in FIG. 5-a to FIG. 5-c, the port 1 of the first combiner 311 is connected to the port 4 of the third combiner 313, and the port 4 of the first combiner 311 is connected to the port 1 of the fourth combiner 314; the port 2 of the second combiner 312 is connected to the port 1 of the third combiner 313, and the port 3 of the second combiner 312 is connected to the port 4 of the fourth combiner 314.

As shown in the examples in FIG. 5-a to FIG. 5-c, the port 3 of the third combiner 313 is connected to the first antenna unit A1, and the port 2 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports of the feeding network 210 include: one of the port 2 of the first combiner 311 and the port 3 of the first combiner 311, and one of the port 1 of the second combiner 312 and the port 4 of the second combiner 312. FIG. 5-a illustrates an example in which the two radio frequency ports of the feeding network 210 may include: the port 2 of the first combiner 311 and the port 4 of the second combiner 312. FIG. 5-b illustrates an example in which the two radio frequency ports of the feeding network 210 may include: the port 3 of the first combiner 311 and the port 1 of the second combiner 312. FIG. 5-c illustrates an example in which the two radio frequency ports of the feeding network 210 may include: the port 3 of the first combiner 311 and the port 4 of the second combiner 312. Certainly, the two radio frequency ports of the feeding network 210 may also include: the port 3 of the first combiner 311 and the port 1 of the second combiner 312.

In some embodiments of the present invention, at least one of the second combiner 312 and the fourth combiner 314 in the examples shown in FIG. 5-a to FIG. 5-c is a 90° hybrid bridge. Certainly, at least one of the second combiner 312 and the fourth combiner 314 in the examples shown in FIG. 5-a to FIG. 5-c is a 90° hybrid bridge, or may also be another type of combiner having the scattering matrix.

In some embodiments of the present invention, the third combiner 313 in the examples shown in FIG. 5-a to FIG. 5-c is a 180° hybrid bridge. Alternatively, as shown in the example in FIG. 4-e, the third combiner 313 in the examples shown in FIG. 5-a to FIG. 5-c may include a third hybrid bridge 3131 and a third phase shifter 3132. The third hybrid bridge 3131 is a 90° hybrid bridge, and the third phase shifter 3132 is a 90° phase shifter. A port 1 of the third hybrid bridge 3131 is used as the port 4 of the third combiner 313, a port 2 of the third hybrid bridge 3131 is used as the port 3 of the third combiner 313, a port 3 of the third hybrid bridge 3131 is used as the port 2 of the third combiner 313, one end of the third phase shifter 3132 is connected to a port 4 of the third hybrid bridge 3131, and the other end of the third phase shifter 3132 is used as the port 1 of the third combiner 313.

In some embodiments of the present invention, the first combiner 311 in the examples shown in FIG. 5-a to FIG. 5-c is a 180° hybrid bridge. Alternatively, as shown in the example shown in FIG. 3-d, the first combiner 311 in the examples shown in FIG. 5-a to FIG. 5-c may include a first hybrid bridge 3111 and a first phase shifter 3112. The first hybrid bridge 3111 is a 90° hybrid bridge, and the first phase shifter 3112 is a 90° phase shifter. A port 1 of the first hybrid bridge 3111 is used as the port 2 of the first combiner 311, a port 4 of the first hybrid bridge 3111 is used as the port 3 of the first combiner 311, a port 3 of the first hybrid bridge 3111 is used as the port 4 of the first combiner 311, one end of the first phase shifter 3112 is connected to a port 2 of the first hybrid bridge 3111, and the other end of the first phase shifter 3112 is used as the port 1 of the first combiner 311.

For another example, as shown in FIG. 6-a to FIG. 6-c, the feeding network 210 may include a first combiner 311, a second combiner 312, a third combiner 313, and a fourth combiner 314.

A scattering matrix among a port 1, a port 2, a port 3, and a port 4 of the first combiner 311 is $[S^1]$, a scattering matrix among a port 1, a port 2, a port 3, and a port 4 of the second combiner 312 is $[S^2]$, a scattering matrix among a port 1, a port 2, a port 3, and a port 4 of the third combiner 313 is $[S^3]$, and a scattering matrix among a port 1, a port 2, a port 3, and a port 4 of the fourth combiner 314 is $[S^4]$, where

$$\left[S^1\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix}$$

As shown in the examples in FIG. 6-a to FIG. 6-c, the port 4 of the first combiner 311 is connected to the port 1 of the third combiner 313, and the port 1 of the first combiner 311 is connected to the port 4 of the fourth combiner 314; the port 2 of the second combiner 312 is connected to the port 4 of the third combiner 313, and the port 3 of the second combiner 312 is connected to the port 1 of the fourth combiner 314.

As shown in the examples in FIG. 6-a to FIG. 6-c, the port 2 of the third combiner 313 is connected to the first antenna unit A1, and the port 3 of the third combiner 313 is connected to the second antenna unit A2; the port 3 of the fourth combiner 314 is connected to the third antenna unit A3, and the port 2 of the fourth combiner 314 is connected to the fourth antenna unit A4.

The two radio frequency ports of the feeding network 210 may include: one of the port 3 of the first combiner 311 and the port 2 of the first combiner 311, and one of the port 1 of the second combiner 312 and the port 4 of the second combiner 312. FIG. 6-a illustrates an example in which the two radio frequency ports of the feeding network 210 may include the port 3 of the first combiner 311 and the port 1 of the second combiner 312. FIG. 6-b illustrates an example in which the two radio frequency ports of the feeding network 210 may include the port 3 of the first combiner 311 and the port 4 of the second combiner 311. FIG. 6-c illustrates an example in which the two radio frequency ports of the feeding network 210 may include the port 2 of the first combiner 311 and the port 4 of the second combiner 312. Certainly, the two radio frequency ports of the feeding network 210 may also include the port 2 of the first combiner 311 and the port 1 of the second combiner 312.

In some embodiments of the present invention, at least one of the second combiner 312 and the third combiner 313 in the examples shown in FIG. 6-a to FIG. 6-c may be a 90° hybrid bridge. Certainly, at least one of the second combiner 312 and the third combiner 313 in the examples shown in FIG. 6-a to FIG. 6-c may also be another type of combiner having the scattering matrix.

In some embodiments of the present invention, the first combiner 311 in the examples shown in FIG. 6-a to FIG. 6-c is a 180° hybrid bridge; or As shown in the example in FIG. 3-e, the first combiner 311 in the examples shown in FIG. 6-a to FIG. 6-c includes a first hybrid bridge 3111 and a first phase shifter 3112. The first hybrid bridge 3111 is a 90° hybrid bridge, and the first phase shifter 3112 is a 90° phase shifter. A port 1 of the first hybrid bridge 3111 is used as the port 3 of the first combiner 311, a port 4 of the first hybrid bridge 3111 is used as the port 2 of the first combiner 311, a port 2 of the first hybrid bridge 3111 is used as the port 4 of the first combiner 311, one end of the first phase shifter 3112 is connected to a port 3 of the first hybrid bridge 3111, and the other end of the first phase shifter 3112 is used as the port 1 of the first combiner 311.

In some embodiments of the present invention, the fourth combiner 314 in the examples shown in FIG. 6-a to FIG. 6-c may be a 180° hybrid bridge; or As shown in the example in FIG. 4-e, the fourth combiner 314 in the examples shown in FIG. 6-a to FIG. 6-c may include a fourth hybrid bridge 3141 and a fourth phase shifter 3142. The fourth hybrid bridge is a 90° hybrid bridge, and the fourth phase shifter 3142 is a 90° phase shifter. A port 2 of the fourth hybrid bridge 3141 is used as the port 2 of the fourth combiner 314, a port 3 of the fourth hybrid bridge 3141 is used as the port 3 of the fourth combiner 314, a port 4 of the fourth hybrid bridge 3141 is used as the port 4 of the fourth combiner 314, one end of the fourth phase shifter 3142 is connected to a port 1 of the fourth hybrid bridge 3141, and the other end of the fourth phase shifter 3142 is used as the port 1 of the fourth combiner 314.

For another example, as shown in FIG. 7-a to 7-d, the feeding network 210 may include: a first combiner 311, a second combiner 312, a third combiner 313, and a fourth combiner 314.

A scattering matrix among a port 1, a port 2, and a port 3 of the first combiner 311 may be, for example, $[S^1]$, a scattering matrix among a port 1, a port 2, and a port 3 of the second combiner 312 may be $[S^2]$, a scattering matrix among a port 1, a port 2, a port 3, and a port 4 of the third combiner 313 may be $[S^3]$, and a scattering matrix among a port 1, a port 2, a port 3, and a port 4 of the fourth combiner 314 may be $[S^4]$, where

$$[S^1] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

As shown in the example in FIG. 7-a, the port 2 of the first combiner 311 is connected to the port 1 of the third combiner 313, and the port 3 of the first combiner 311 is connected to the port 1 of the fourth combiner 314; the port 2 of the second combiner 312 is connected to the port 4 of the third combiner 313, and the port 3 of the second combiner 312 is connected to the port 4 of the fourth combiner 314.

As shown in the example in FIG. 7-a, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

As shown in the example in FIG. 7-b, the port 3 of the first combiner 311 is connected to the port 1 of the third combiner 313, and the port 2 of the first combiner 311 is connected to the port 1 of the fourth combiner 314; the port 2 of the second combiner 312 is connected to the port 4 of the third combiner 313, and the port 3 of the second combiner 312 is connected to the port 4 of the fourth combiner 314.

As shown in the example in FIG. 7-b, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

As shown in the example in FIG. 7-c, the port 3 of the first combiner 311 is connected to the port 1 of the third combiner 313, and the port 2 of the first combiner 311 is connected to the port 1 of the fourth combiner 314; the port 3 of the second combiner 312 is connected to the port 4 of the third combiner 313, and the port 2 of the second combiner 312 is connected to the port 4 of the fourth combiner 314.

As shown in the example in FIG. 7-c, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

As shown in the example in FIG. 7-d, the port 2 of the first combiner 311 is connected to the port 1 of the third combiner 313, and the port 3 of the first combiner 311 is connected to the port 1 of the fourth combiner 314; the port 3 of the second combiner 312 is connected to the port 4 of the third combiner 313, and the port 2 of the second combiner 312 is connected to the port 4 of the fourth combiner 314.

As shown in the example in FIG. 7-d, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

As shown in FIG. 7-a to FIG. 7-d, the two radio frequency ports of the feeding network 210 include: the port 1 of the first combiner 311 and the port 1 of the second combiner 312.

In some embodiments of the present invention, at least one of the third combiner 313 and the fourth combiner 314 in the example shown in FIG. 7-a to FIG. 7-d is a 90° hybrid bridge. Certainly, at least one of the third combiner 313 and the fourth combiner 314 in the examples in FIG. 7-a to FIG. 7-d is a 90° hybrid bridge, or may also be another type of combiner having the scattering matrix.

In some embodiments of the present invention, the first combiner 311 in the examples shown in FIG. 7-a to FIG. 7-d may be a first balun, where a combiner end of first balun is used as the port 1 of the first combiner 311, an in-phase end of the first balun is used as the port 2 of the first combiner 311, and an out-phase end of the first balun is used as the port 3 of the first combiner 311.

In the embodiments of the present invention, a scattering matrix $[S_b]$ among a port 1, a port 2, and a port 3 of a balun may be, for example, as follows:

$$[S_b] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix}$$

Alternatively, as shown in the example in FIG. 7-e, the first combiner 311 in the examples shown in FIG. 7-a to FIG. 7-d includes a first power divider 3113 and a fifth phase shifter 3114. A combiner end of the first power divider 3113 is used as the port 1 of the first combiner 311, a first divider end of the first power divider 3113 is used as the port 2 of the first combiner 311, one end of the fifth phase shifter 3114 is connected to a second divider end of the first power divider 3113, and the other end of the fifth phase shifter 3114 is used as the port 3 of the first combiner 311.

In some embodiments of the present invention, the second combiner 312 in the examples shown in FIG. 7-a to FIG. 7-d may be a second balun, where a combiner end of the second balun is used as the port 1 of the second combiner 312, an in-phase end of the second balun is used as the port 2 of the first combiner 312, and an out-phase end of the second balun is used as the port 3 of the second combiner 312.

Alternatively, as shown in the example in FIG. 7-f, the second combiner 312 in the examples in FIG. 7-a to FIG. 7-d include a second power divider 3123 and a sixth phase shifter 3124. A combiner end of the second power divider 3123 is used as the port 1 of the second combiner 312, a first divider end of the first power divider 3123 is used as the port 2 of the second combiner 312, one end of the sixth phase shifter 3124 is connected to a second divider end of the second power divider 3123, and the other end of the sixth phase shifter 3124 is used as the port 3 of the first combiner 312.

For another example, in the examples shown in FIG. 8-a to FIG. 8-c, the feeding network includes a first combiner 311, a second combiner 312, a third combiner 313, and a fourth combiner 314.

A scattering matrix among a port 1, a port 2, a port 3, and a port 4 of the first combiner 311 is $[S^1]$, a scattering matrix among a port 1, a port 2 and a port 3 of the second combiner 312 is $[S^2]$, a scattering matrix among a port 1, a port 2, a port 3, and a port 4 of the third combiner 313 is $[S^3]$, and a scattering matrix among a port 1, a port 2, a port 3, and a port 4 of the fourth combiner 314 is $[S^4]$, where

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix};$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix};$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix};$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

As shown in the example in FIG. 8-a, the port 1 of the first combiner 311 is connected to the port 1 of the third combiner 313, and the port 4 of the first combiner 311 is connected to the port 1 of the fourth combiner 314; the port 2 of the second combiner 312 is connected to the port 4 of the third combiner 313, and the port 3 of the second combiner 312 is connected to the port 4 of the fourth combiner 314.

As shown in the example in FIG. 8-a, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports of the feeding network 210 include: one of the port 2 of the first combiner 311 and the port 3 of the first combiner 311, and the port 1 of the second combiner 312.

As shown in the example in FIG. 8-b, the port 1 of the first combiner 311 is connected to the port 1 of the third combiner 313, and the port 4 of the first combiner 311 is connected to the port 1 of the fourth combiner 314; the port 3 of the second combiner 312 is connected to the port 4 of the third combiner 313, and the port 2 of the second combiner 312 is connected to the port 4 of the fourth combiner 314.

As shown in the example in FIG. 8-b, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports include: the port 1 of the second combiner 312, one of the port 2 of the first combiner 311 and the port 3 of the first combiner 311.

In some embodiments of the present invention, the first combiner 311 in the examples shown in FIG. 8-a to FIG. 8-b may be a 180° hybrid bridge. Alternatively, as shown in the example in FIG. 3-d, the first combiner 311 in the examples shown in FIG. 8-a to FIG. 8-b may include a first hybrid bridge 3111 and a first phase shifter 3112. The first hybrid bridge 3111 may be, for example, a 90° hybrid bridge, and the first phase shifter 3112 is a 90° phase shifter. A port 1 of the first hybrid bridge 3111 is used as the port 2 of the first combiner 311, a port 4 of the first hybrid bridge 3111 is used as the port 3 of the first combiner 311, and a port 3 of the first hybrid bridge 3111 is used as the port 4 of the first combiner 311. One end of the first phase shifter 3112 is connected to a port 2 of the first hybrid bridge 3111, and the other end of the first phase shifter 3112 is used as the port 1 of the first combiner 311.

In some embodiments of the present invention, the second combiner 312 in the examples shown in FIG. 8-a to FIG. 8-b may be a second balun, where a combiner end of the second balun is used as the port 1 of the second combiner 312, an in-phase end of the second balun is used as the port 2 of the first combiner 312, and an out-phase end of the second balun is used as the port 3 of the second combiner 312.

Alternatively, as shown in the example in FIG. 7-f, the second combiner 312 in the examples shown in FIG. 8-a to FIG. 8-b include a second power divider 3123 and a sixth phase shifter 3124. A combiner end of the second power divider 3123 is used as the port 1 of the second combiner 312, a first divider end of the first power divider 3123 is used as the port 2 of the second combiner 312, one end of the sixth phase shifter 3124 is connected to a second divider end of the second power divider 3123, and the other end of the sixth phase shifter 3124 is used as the port 3 of the first combiner 312.

As shown in the example in FIG. 8-c, the port 4 of the first combiner 311 is connected to the port 1 of the third combiner 313, and the port 1 of the first combiner 311 is connected to the port 1 of the fourth combiner 314; the port 2 of the second combiner 312 is connected to the port 4 of the third combiner 313, and the port 3 of the second combiner 312 is connected to the port 4 of the fourth combiner 314.

As shown in the example in FIG. 8-c, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports include: one of the port 2 of the first combiner 311 and the port 3 of the first combiner 311, and the port 1 of the second combiner 312.

As shown in the example in FIG. 8-d, the port 4 of the first combiner 311 is connected to the port 1 of the third combiner 313, and the port 1 of the first combiner 311 is connected to the port 1 of the fourth combiner 314; the port 3 of the second combiner 312 is connected to the port 4 of the third combiner 313, and the port 2 of the second combiner 312 is connected to the port 4 of the fourth combiner 314.

As shown in the example in FIG. 8-d, the port 2 of the third combiner 313 is connected to the first antenna unit A1, and the port 3 of the third combiner 313 is connected to the second antenna unit A2; the port 2 of the fourth combiner 314 is connected to the third antenna unit A3, and the port 3 of the fourth combiner 314 is connected to the fourth antenna unit A4.

The two radio frequency ports include: one of the port 2 of the first combiner 311 and the port 3 of the first combiner 311, and the port 1 of the second combiner 312.

In some embodiments of the present invention, the first combiner 311 in the examples shown in FIG. 8-c to FIG. 8-d may be a 180° hybrid bridge. Alternatively, as shown in the example in FIG. 3-e, the first combiner 312 in the examples in FIG. 8-c to FIG. 8-d may include a first hybrid bridge 3121 and a first phase shifter 3122. The first hybrid bridge 3121 may be, for example, a 90° hybrid bridge, and the first phase shifter 3122 is a 90° phase shifter. A port 1 of the second hybrid bridge 3121 is used as the port 3 of the second combiner 312, a port 4 of the second hybrid bridge 3121 is used as the port 2 of the second combiner 312, and a port 2 of the second hybrid bridge 3121 is used as the port 4 of the second combiner 312. One end of the second phase shifter 3122 is connected to a port 3 of the second hybrid bridge 3121, and the other end of the second phase shifter 3122 is used as the port 1 of the second combiner 312.

In some embodiments of the present invention, the second combiner 312 in the examples shown in FIG. 8-c to FIG. 8-d may be a second balun, where a combiner end of the second balun is used as the port 1 of the second combiner 312, an in-phase end of the second balun is used as the port 2 of the first combiner 312, and an out-phase end of the second balun is used as the port 3 of the second combiner 312.

Alternatively, as shown in the example in FIG. 7-f, the second combiner 312 in the examples in FIG. 8-c to FIG. 8-d includes a second power divider 3123 and a sixth phase shifter 3124. A combiner end of the second power divider 3123 is used as the port 1 of the second combiner 312, a first divider end of the first power divider 3123 is used as the port 2 of the second combiner 312, one end of the sixth phase shifter 3124 is connected to a second divider end of the second power divider 3123, and the other end of the sixth phase shifter 3124 is used as the port 3 of the first combiner 312.

In some embodiments of the present invention, at least one of the third combiner 313 and the fourth combiner 314 in the examples shown in FIG. 8-a to FIG. 8-d is a 90° hybrid bridge. Certainly, at least one of the third combiner 313 and the fourth combiner 314 in the examples shown in FIG. 8-a to FIG. 8-d is a 90° hybrid bridge, or may also be another type of combiner having the scattering matrix.

It may be understood that FIG. 3-a to FIG. 8-d merely show examples of possible internal structures of some optional feeding networks 210. In FIG. 3-a to FIG. 8-d, a multi-port 4-antenna architecture is mainly used as an example. Certainly, the wireless communications device may also have more antennas or fewer antennas, or may also have more radio frequency ports or fewer radio frequency ports.

To facilitate other extensions of solutions based on the concept in the examples, a diagram of an equivalent relationship between a 90° hybrid bridge and a 180° hybrid bridge is further provided below.

As shown in the examples in FIG. 9-a to FIG. 9-d, a 90° hybrid bridge and a 90° phase shifter, after being combined, may be equivalent to a 180° hybrid bridge.

In the example in FIG. 9-a, a port 2 of a 90° hybrid bridge is used as a port 2 of a 180° hybrid bridge. A port 3 of the 90° hybrid bridge is used as a port 3 of the 180° hybrid bridge. A port 4 of the 90° hybrid bridge is used as a port 4 of the 180° hybrid bridge. One end of a 90° phase shifter is connected to a port 1 of the 90° hybrid bridge, and the other end of the 90° phase shifter is used as a port 1 of the 180° hybrid bridge.

In the example in FIG. 9-b, a port 1 of a 90° hybrid bridge is used as a port 2 of a 180° hybrid bridge. A port 4 of the 90° hybrid bridge is used as a port 3 of the 180° hybrid bridge. A port 3 of the 90° hybrid bridge is used as a port 4 of the 180° hybrid bridge. One end of a 90° phase shifter is connected to a port 2 of the 90° hybrid bridge, and the other end of the 90° phase shifter is used as a port 1 of the 180° hybrid bridge.

In the example in FIG. 9-c, a port 1 of a 90° hybrid bridge is used as a port 4 of a 180° hybrid bridge. A port 2 of the 90° hybrid bridge is used as a port 3 of the 180° hybrid bridge. A port 3 of the 90° hybrid bridge is used as a port 2 of the 180° hybrid bridge. One end of a 90° phase shifter is connected to a port 4 of the 90° hybrid bridge, and the other end of the 90° phase shifter is used as a port 1 of the 180° hybrid bridge.

In the example in FIG. 9-d, a port 1 of a 90° hybrid bridge is used as a port 3 of a 180° hybrid bridge. A port 4 of the 90° hybrid bridge is used as a port 3 of the 180° hybrid bridge. A port 2 of the 90° hybrid bridge is used as a port 4 of the 180° hybrid bridge. One end of a 90° phase shifter is connected to a port 3 of the 90° hybrid bridge, and the other end of the 90° phase shifter is used as a port 1 of the 180° hybrid bridge.

It may found by mean of tests that in a feeding network architecture in the examples in FIG. 3-a to FIG. 8-d and a variant of a feeding network architecture based thereon, a feeding network performs power distribution and phase shifting on a radio frequency signal to be transmitted, N antenna units may transmit N radio frequency signals obtained after power distribution and phase shifting are performed by the feeding network, and phases of the N radio frequency signals are mutually unequal; because two transceivers of the wireless communications device corresponding to different communications standards may implement sharing of the antenna array by using the feeding network, thereby helping to reduce a fabrication cost of a wireless communications device in a scenario of supporting at least two communications standards.

Furthermore, if the antenna array is an omnidirectional antenna array (for example, an annular omnidirectional antenna array), a difference in phases of two radio frequency signals, transmitted by any two adjacent antenna units in the N antenna units, in the N radio frequency signals is equal to K*360°/N, which helps to obtain a more desirable omnidirectional pattern on a specified plane (for example, a horizontal plane or a vertical plane), thereby further helping to implement more desirable omnidirectional coverage on a specified plane (for example, a horizontal plane or a vertical plane), and moreover helping to reduce space for antenna installation.

Furthermore, the feeding network is built by using a hybrid bridge, a power divider, a balun, and the like, thereby helping to reduce a hardware cost of a feeding network.

The wireless communications device in the embodiment of the present invention may be, for example, another wireless communications device on a side of a base station or a network.

In the several embodiments provided in the present application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device, and may specifically be a processor in a computer device) to perform all or a part of the steps of the methods described in the embodiments of the present invention. The storage medium may include: any medium that may store program code, such as a USB flash disk, a removable hard disk, a magnetic disk, an optical disk, a read-only memory (ROM, Read-Only Memory), a random access memory (RAM, Random Access Memory), or the like.

The foregoing embodiments are merely intended for describing the technical solutions of the present invention, but not for limiting the present invention. Although the present invention is described in detail With reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A wireless communications device, comprising:

a feeding network, two transceivers, and an antenna array comprising N antenna units, wherein the feeding network has N antenna ports and two radio frequency ports, the N antenna ports are connected to the N antenna units in a one-to-one correspondence, the two transceivers are connected to the two radio frequency ports in a one-to-one correspondence, and communications standards of radio frequency signals output by the two transceivers to the two radio frequency ports are different from each other; and the feeding network is configured to perform power distribution and phase shifting on a radio frequency signal input from any one radio frequency port in the two radio frequency ports to the feeding network, to obtain N radio frequency signals, and output the N radio frequency signals to the N antenna units through the N antenna ports for transmission, wherein the N radio frequency signals and the N radio frequency ports are in a one-to-one correspondence, phases of the N radio frequency signals are mutually unequal, and N is a positive integer.

2. The wireless communications device according to claim 1, wherein, a difference in phases of two radio frequency signals, transmitted by any two adjacent antenna units in the N antenna units, in the N radio frequency signals is equal to K*360°/N, wherein K and N are positive integers, and N is greater than 2.

3. The wireless communications device according to claim 1 or 2, wherein the antenna array is an omnidirectional antenna array.

4. The wireless communications device according to claim 3, wherein the horizontal-plane omnidirectional antenna array or vertical-plane omnidirectional antenna array.

5. The wireless communications device according to claim 3 or 4, wherein at least one antenna unit in the N antenna units is a single antenna or an antenna subarray.

6. The wireless communications device according to claim 3 or 4 or 5, wherein feed points of the N antenna units in the antenna array are located on a same ring.

7. The wireless communications device according to any one of claims 1 to 6, wherein, the feeding network comprises:

a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$\left[S^1\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

wherein
an element $s_{ij}$ in a scattering matrix represents an ideal scattering coefficient from input at a port j to output at a port i; and
a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;
or,
a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;
or,
a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

8. The wireless communications device according to any one of claims 1 to 6, wherein, the feeding network comprises:

a first combiner, a second combiner, a third combiner, and a fourth combiner, wherein a scattering matrix among a port 1, a port 2, a port 3, and a port 4 of the second combiner is $[S^2]$, a scattering matrix among a port 1, a port 2, a port 3, and a port 4 of the third combiner is $[S^3]$, a scattering matrix among a port 1, a port 2, a port 3, and a port 4 of the fourth combiner is $[S^4]$, and a scattering matrix among a port 1, a port 2, and a port 3 of the first combiner is $[S^1]$, wherein

$$\left[S^1\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein an element $s_{ij}$ in a scattering matrix represents an ideal scattering coefficient from input at a port j to output at a port i; and

a radio frequency signal input from one radio frequency port in the two radio frequency ports to the feeding network first flows through the first combiner, and then flows through the third combiner and the fourth combiner to reach the N antenna ports; and a radio frequency signal input from the other radio frequency port in the two radio frequency ports to the feeding network first flows through the second combiner, and then flows through the third combiner and the fourth combiner to reach the N antenna ports;

or,

a radio frequency signal input from one radio frequency port in the two radio frequency ports to the feeding network first flows through the first combiner, and then flows through the second combiner and the fourth combiner to reach the N antenna ports; and a radio frequency signal input from the other radio frequency port in the two radio frequency ports to the feeding network first flows through the third combiner, the second combiner, and the fourth combiner to reach the N antenna ports;

or,

a radio frequency signal input from one radio frequency port in the two radio frequency ports to the feeding network first flows through the third combiner, and then flows through the first combiner and the second combiner to reach the N antenna ports; and a radio frequency signal input from the other radio frequency port in the two radio frequency ports to the feeding network first flows through the fourth combiner, and then flows through the first combiner and the second combiner to reach the N antenna ports.

9. The wireless communications device according to any one of claims 1 to 6, wherein,

the N antenna units comprise: a first antenna unit, a second antenna unit, a third antenna unit, and a fourth antenna unit; and

the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein

an element $s_{ij}$ in a scattering matrix represents an ideal scattering coefficient from input at a port j to output at a port i; the port 1 of the first combiner is connected to the port 1 of the third combiner, and the port 4 of the first combiner is connected to the port 1 of the fourth combiner; the port 4 of the second combiner is connected to the port 4 of the third combiner, and the port 1 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports comprise: one of the port 2 of the first combiner and the port 3 of the first combiner, and one of the port 2 of the second combiner and the port 3 of the second combiner.

**10.** The wireless communications device according to claim 9, wherein,
at least one of the third combiner and the fourth combiner is a 90° hybrid bridge.

**11.** The wireless communications device according to claim 9 or 10, wherein,
the first combiner is a 180° hybrid bridge;
or,
the first combiner comprises a first hybrid bridge and a first phase shifter, wherein the first hybrid bridge is a 90° hybrid bridge, and the first phase shifter is a 90° phase shifter, wherein
a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, wherein
a scattering matrix of the first hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

**12.** The wireless communications device according to any one of claims 9 to 11, wherein,
the second combiner is a 180° hybrid bridge;
or,
the second combiner comprises a second hybrid bridge and a second phase shifter, wherein the second hybrid bridge is a 90° hybrid bridge, and the second phase shifter is a 90° phase shifter, wherein a port 1 of the second hybrid bridge is used as the port 3 of the second combiner, a port 4 of the second hybrid bridge is used as the port 2 of the second combiner, a port 2 of the second hybrid bridge is used as the port 4 of the second combiner, one end of the second phase shifter is connected to a port 3 of the second hybrid bridge, and the other end of the second phase shifter is used as the port 1 of the second combiner, wherein a scattering matrix of the second hybrid bridge is [$S_{90}$], wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

**13.** The wireless communications device according to any one of claims 1 to 6, wherein,
the N antenna units comprise: a first antenna unit, a second antenna unit, a third antenna unit, and a fourth antenna unit; and
the feeding network comprises: a first combiner, a second combiner, a third combiner, and a fourth combiner, wherein a scattering matrix among a port 1, a port 2, a port 3, and a port 4 of the first combiner is [$S^1$], a scattering matrix among a port 1, a port 2, a port 3, and a port 4 of the second combiner is [$S^2$], a scattering matrix among a port 1, a port 2, a port 3, and a port 4 of the third combiner is [$S^3$], and a scattering matrix among a port 1, a port 2, a port 3, and a port 4 of the fourth combiner is [$S^4$], wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

wherein

an element $s_{ij}$ in a scattering matrix represents an ideal scattering coefficient from input at a port j to output at a port i; the port 2 of the first combiner is connected to the port 4 of the third combiner, and the port 3 of the first combiner is connected to the port 1 of the fourth combiner; the port 2 of the second combiner is connected to the port 1 of the third combiner, and the port 3 of the second combiner is connected to the port 4 of the fourth combiner; the port 3 of the third combiner is connected to the first antenna unit, and the port 4 of the third combiner is connected to the second antenna unit; the port 2 of the fourth combiner is connected to the third antenna unit, and the port 4 of the fourth combiner is connected to the fourth antenna unit; and the two radio frequency ports comprise: one of the port 1 of the first combiner and the port 4 of the first combiner, and one of the port 1 of the second combiner and the port 4 of the second combiner.

14. The wireless communications device according to claim 13, wherein at least one of the first combiner and the second combiner is a 90° hybrid bridge.

15. The wireless communications device according to claim 13 or 14, wherein,
the third combiner is a 180° hybrid bridge;
or,
the third combiner comprises a third hybrid bridge and a third phase shifter, wherein the third hybrid bridge is a 90° hybrid bridge, and the third phase shifter is a 90° phase shifter, wherein
a port 1 of the third hybrid bridge is used as the port 4 of the third combiner, a port 2 of the third hybrid bridge is used as the port 3 of the third combiner, a port 3 of the third hybrid bridge is used as the port 2 of the third combiner, one end of the third phase shifter is connected to a port 4 of the third hybrid bridge, and the other end of the third phase shifter is used as the port 1 of the third combiner, wherein
a scattering matrix of the third hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

16. The wireless communications device according to anyone of claims 13 to 15, wherein,
the fourth combiner is a 180° hybrid bridge;
or,
the fourth combiner comprises a fourth hybrid bridge and a fourth phase shifter, wherein the fourth hybrid bridge is a 90° hybrid bridge, and the fourth phase shifter is a 90° phase shifter, wherein
a port 2 of the fourth hybrid bridge is used as the port 2 of the fourth combiner, a port 3 of the fourth hybrid bridge is used as the port 3 of the fourth combiner, a port 4 of the fourth hybrid bridge is used as the port 4 of the fourth combiner, one end of the fourth phase shifter is connected to a port 1 of the fourth hybrid bridge, and the other end of the fourth phase shifter is used as the port 1 of the fourth combiner, wherein
a scattering matrix of the fourth hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

**17.** The wireless communications device according to anyone of claims 1 to 6, wherein,
the N antenna units comprise: a first antenna unit, a second antenna unit, a third antenna unit, and a fourth antenna unit; and
the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein
an element $s_{ij}$ in a scattering matrix represents an ideal scattering coefficient from input at a port j to output at a port i;
the port 1 of the first combiner is connected to the port 4 of the third combiner, and the port 4 of the first combiner is connected to the port 1 of the fourth combiner; the port 2 of the second combiner is connected to the port 1 of the third combiner, and the port 3 of the second combiner is connected to the port 4 of the fourth combiner; the port 3 of the third combiner is connected to the first antenna unit, and the port 2 of the third combiner is connected to the second antenna unit; the port 2 of the fourth combiner is connected to the third antenna unit, and the port 3 of the fourth combiner is connected to the fourth antenna unit; and
the two radio frequency ports comprise: one of the port 2 of the first combiner and the port 3 of the first combiner, and one of the port 1 of the second combiner and the port 4 of the second combiner.

18. The wireless communications device according to claim 17, wherein at least one of the second combiner and the fourth combiner is a 90° hybrid bridge.

19. The wireless communications device according to claim 17 or 18, wherein,
the third combiner is a 180° hybrid bridge;
or,
the third combiner comprises a third hybrid bridge and a third phase shifter, wherein the third hybrid bridge is a 90° hybrid bridge, and the third phase shifter is a 90° phase shifter, wherein
a port 1 of the third hybrid bridge is used as the port 4 of the third combiner, a port 2 of the third hybrid bridge is used as the port 3 of the third combiner, a port 3 of the third hybrid bridge is used as the port 2 of the third combiner, one end of the third phase shifter is connected to a port 4 of the third hybrid bridge, and the other end of the third phase shifter is used as the port 1 of the third combiner, wherein
a scattering matrix of the third hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

20. The wireless communications device according to anyone of claims 17 to 19, wherein,
the first combiner is a 180° hybrid bridge;
or,
the first combiner comprises a first hybrid bridge and a first phase shifter, wherein the first hybrid bridge is a 90° hybrid bridge, and the first phase shifter is a 90° phase shifter, wherein
a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, wherein
a scattering matrix of the first hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

21. The wireless communications device according to anyone of claims 1 to 6, wherein,
the N antenna units comprise: a first antenna unit, a second antenna unit, a third antenna unit, and a fourth antenna unit; and
the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, a port 3, and a port 4 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

wherein

an element $s_{ij}$ in a scattering matrix represents an ideal scattering coefficient from input at a port j to output at a port i; the port 4 of the first combiner is connected to the port 1 of the third combiner, and the port 1 of the first combiner is connected to the port 4 of the fourth combiner; the port 2 of the second combiner is connected to the port 4 of the third combiner, and the port 3 of the second combiner is connected to the port 1 of the fourth combiner;

the port 2 of the third combiner is connected to the first antenna unit, and the port 3 of the third combiner is connected to the second antenna unit; the port 3 of the fourth combiner is connected to the third antenna unit, and the port 2 of the fourth combiner is connected to the fourth antenna unit; and

the two radio frequency ports comprise: one of the port 3 of the first combiner and the port 2 of the first combiner, and one of the port 1 of the second combiner and the port 4 of the second combiner.

22. The wireless communications device according to claim 21, wherein at least one of the second combiner and the third combiner is a 90° hybrid bridge.

23. The wireless communications device according to any one of claims 21 to 22, wherein,

the first combiner is a 180° hybrid bridge;

or,

the first combiner comprises a first hybrid bridge and a first phase shifter, wherein the first hybrid bridge is a 90° hybrid bridge, and the first phase shifter is a 90° phase shifter, wherein

a port 1 of the first hybrid bridge is used as the port 3 of the first combiner, a port 4 of the first hybrid bridge is used as the port 2 of the first combiner, a port 2 of the first hybrid bridge is used as the port 4 of the first combiner, one end of the first phase shifter is connected to a port 3 of the first hybrid bridge, and the other end of the first phase shifter is used as the port 1 of the first combiner, wherein

a scattering matrix of the first hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

24. The wireless communications device according to any one of claims 21 to 23, wherein,
the fourth combiner is a 180° hybrid bridge;
or,
the fourth combiner comprises a fourth hybrid bridge and a fourth phase shifter, wherein the fourth hybrid bridge is a 90° hybrid bridge, and the fourth phase shifter is a 90° phase shifter, wherein a port 1 of the fourth hybrid bridge is used as the port 4 of the fourth combiner, a port 2 of the fourth hybrid bridge is used as the port 3 of the fourth combiner, a port 3 of the fourth hybrid bridge is used as the port 2 of the fourth combiner, one end of the fourth phase shifter is connected to a port 4 of the fourth hybrid bridge, and the other end of the fourth phase shifter is used as the port 1 of the fourth combiner, wherein a scattering matrix of the fourth hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

25. The wireless communications device according to anyone of claims 1 to 6, wherein, the N antenna units comprise:

a first antenna unit, a second antenna unit, a third antenna unit, and a fourth antenna unit; and the feeding network comprises: a first combiner, a second combiner, a third combiner, and a fourth combiner, wherein
a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein

an element $s_{ij}$ in a scattering matrix represents an ideal scattering coefficient from input at a port j to output at a port i;

the port 2 of the first combiner is connected to the port 1 of the third combiner, the port 3 of the first combiner is connected to the port 1 of the fourth combiner; the port 2 of the second combiner is connected to the port 4 of the third combiner, the port 3 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports comprise: the port 1 of the first combiner and the port 1 of the second combiner.

26. The wireless communications device according to anyone of claims 1 to 6, wherein, the N antenna units comprise:

a first antenna unit, a second antenna unit, a third antenna unit, and a fourth antenna unit; and

the feeding network comprises: a first combiner, a second combiner, a third combiner, and a fourth combiner, wherein

a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein

an element $s_{ij}$ in a scattering matrix represents an ideal scattering coefficient from input at a port j to output at a port i;

the port 3 of the first combiner is connected to the port 1 of the third combiner, the port 2 of the first combiner is connected to the port 1 of the fourth combiner; the port 2 of the second combiner is connected to the port 4 of the third combiner, the port 3 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports comprise: the port 1 of the first combiner and the port 1 of the second combiner.

27. The wireless communications device according to anyone of claims 1 to 6, wherein, the N antenna units comprise:

a first antenna unit, a second antenna unit, a third antenna unit, and a fourth antenna unit; and

the feeding network comprises: a first combiner, a second combiner, a third combiner, and a fourth combiner, wherein

a scattering matrix among a port 1, a port 2, and a port 3 of the first combiner is [$S^1$], a scattering matrix among a port 1, a port 2, and a port 3 of the second combiner is [$S^2$], a scattering matrix among a port 1, a port 2, a port 3, and a port 4 of the third combiner is [$S^3$], and a scattering matrix among a port 1, a port 2, a port 3, and a port 4 of the fourth combiner is [$S^4$], wherein

$$\left[ S^1 \right] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$\left[ S^2 \right] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$\left[ S^3 \right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[ S^4 \right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein

an element $s_{ij}$ in a scattering matrix represents an ideal scattering coefficient from input at a port j to output at a port i;

the port 2 of the first combiner is connected to the port 1 of the third combiner, the port 3 of the first combiner is connected to the port 1 of the fourth combiner; the port 3 of the second combiner is connected to the port 4 of the third combiner, the port 2 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and

the two radio frequency ports comprise: the port 1 of the first combiner and the port 1 of the second combiner.

28. The wireless communications device according to anyone of claims 1 to 6, wherein, the N antenna units comprise:

a first antenna unit, a second antenna unit, a third antenna unit, and a fourth antenna unit; and
the feeding network comprises: a first combiner, a second combiner, a third combiner, and a fourth combiner, wherein

a scattering matrix among a port 1, a port 2, and a port 3 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$\left[S^1\right] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$\left[S^2\right] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$\left[S^3\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

wherein
an element $s_{ij}$ in a scattering matrix represents an ideal scattering coefficient from input at a port j to output at a port i;
the port 3 of the first combiner is connected to the port 1 of the third combiner, the port 2 of the first combiner is connected to the port 1 of the fourth combiner; the port 3 of the second combiner is connected to the port 4 of the third combiner, the port 2 of the second combiner is connected to the port 4 of the fourth combiner;
the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and
the two radio frequency ports comprise: the port 1 of the first combiner and the port 1 of the second combiner.

29. The wireless communications device according to any one of claims 25 to 28, wherein,
the first combiner is a first balun, wherein a combiner end of the first balun is used as the port 1 of the first combiner, an in-phase end of the first balun is used as the port 2 of the first combiner, and an out-phase end of the first balun is used as the port 3 of the first combiner;

or,

the first combiner comprises a first power divider and a fifth phase shifter, wherein a combiner end of the first power divider is used as the port 1 of the first combiner, a first divider end of the first power divider is used as the port 2 of the first combiner, one end of the fifth phase shifter is connected to a second divider end of the first power divider, and the other end of the fifth phase shifter is used as the port 3 of the first combiner.

30. The wireless communications device according to anyone of claims 1 to 6, wherein,

the N antenna units comprise: a first antenna unit, a second antenna unit, a third antenna unit, and a fourth antenna unit; and

the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$,

wherein

$$
[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},
$$

$$
[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},
$$

$$
[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},
$$

and

$$
[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},
$$

wherein

an element $s_{ij}$ in a scattering matrix represents an ideal scattering coefficient from input at a port j to output at a port i;

the port 1 of the first combiner is connected to the port 1 of the third combiner, the port 4 of the first combiner is connected to the port 1 of the fourth combiner; the port 2 of the second combiner is connected to the port 4 of the third combiner, the port 3 of the second combiner is connected to the port 4 of the fourth combiner;

the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and
the two radio frequency ports comprise: one of the port 2 of the first combiner and the port 3 of the first combiner, and the port 1 of the second combiner.

31. The wireless communications device according to any one of claims 1 to 6, wherein,
the N antenna units comprise: a first antenna unit, a second antenna unit, a third antenna unit, and a fourth antenna unit; and
the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$,
wherein

$$\left[S^1\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & 1 & -j & 0 \\ 1 & 0 & 0 & 1 \\ -j & 0 & 0 & j \\ 0 & 1 & j & 0 \end{bmatrix},$$

$$\left[S^2\right]=\begin{bmatrix} s_{11} & s_{12} & s_{13} \\ s_{21} & s_{22} & s_{23} \\ s_{31} & s_{32} & s_{33} \end{bmatrix}=-\frac{1}{\sqrt{2}}\begin{bmatrix} 0 & 1 & -1 \\ 1 & 0 & 0 \\ -1 & 0 & 0 \end{bmatrix},$$

$$\left[S^3\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

and

$$\left[S^4\right]=\begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix}=-\frac{1}{\sqrt{2}}\begin{bmatrix} 0 & j & 1 & 0 \\ j & 0 & 0 & 1 \\ 1 & 0 & 0 & j \\ 0 & 1 & j & 0 \end{bmatrix},$$

wherein
an element $s_{ij}$ in a scattering matrix represents an ideal scattering coefficient from input at a port j to output at a port i;
the port 1 of the first combiner is connected to the port 1 of the third combiner, the port 4 of the first combiner is connected to the port 1 of the fourth combiner; the port 3 of the second combiner is connected to the port 4 of the third combiner, the port 2 of the second combiner is connected to the port 4 of the fourth combiner;
the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and
the two radio frequency ports comprise: one of the port 2 of the first combiner and the port 3 of the first combiner, and the port 1 of the second combiner.

32. The wireless communications device according to claim 30 or 31, wherein,

the first combiner is a 180° hybrid bridge;

or,

the first combiner comprises a first hybrid bridge and a first phase shifter, wherein the first hybrid bridge is a 90° hybrid bridge, and the first phase shifter is a 90° phase shifter, wherein

a port 1 of the first hybrid bridge is used as the port 2 of the first combiner, a port 4 of the first hybrid bridge is used as the port 3 of the first combiner, a port 3 of the first hybrid bridge is used as the port 4 of the first combiner, one end of the first phase shifter is connected to a port 2 of the first hybrid bridge, and the other end of the first phase shifter is used as the port 1 of the first combiner, wherein

a scattering matrix of the first hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

33. The wireless communications device according to anyone of claims 1 to 6, wherein,

the N antenna units comprise: a first antenna unit, a second antenna unit, a third antenna unit, and a fourth antenna unit; and

the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$,

wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

an element $s_{ij}$ in a scattering matrix represents an ideal scattering coefficient from input at a port j to output at a port i; the port 4 of the first combiner is connected to the port 1 of the third combiner, the port 1 of the first combiner is connected to the port 1 of the fourth combiner; the port 2 of the second combiner is connected to the port 4 of the third combiner, the port 3 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports comprise: one of the port 2 of the first combiner and the port 3 of the first combiner, and the port 1 of the second combiner.

34. The wireless communications device according to anyone of claims 1 to 6, wherein, the N antenna units comprise: a first antenna unit, a second antenna unit, a third antenna unit, and a fourth antenna unit; and the feeding network comprises: a first combiner, a second combiner, a third combiner, and a fourth combiner, wherein a scattering matrix among a port 1, a port 2, a port 3, and a port 4 of the first combiner is $[S^1]$, a scattering matrix among a port 1, a port 2, and a port 3 of the second combiner is $[S^2]$, a scattering matrix among a port 1, a port 2, a port 3, and a port 4 of the third combiner is $[S^3]$, and a scattering matrix among a port 1, a port 2, a port 3, and a port 4 of the fourth combiner is $[S^4]$, wherein

$$[S^1] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & 1 & -j & 0 \\ 1 & 0 & 0 & 1 \\ -j & 0 & 0 & j \\ 0 & 1 & j & 0 \end{bmatrix},$$

$$[S^2] = \begin{bmatrix} s_{11} & s_{12} & s_{13} \\ s_{21} & s_{22} & s_{23} \\ s_{31} & s_{32} & s_{33} \end{bmatrix} = -\frac{1}{\sqrt{2}} \begin{bmatrix} 0 & 1 & -1 \\ 1 & 0 & 0 \\ -1 & 0 & 0 \end{bmatrix},$$

$$[S^3] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

and

$$[S^4] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix},$$

an element $s_{ij}$ in a scattering matrix represents an ideal scattering coefficient from input at a port j to output at a port i; the port 4 of the first combiner is connected to the port 1 of the third combiner, the port 1 of the first combiner is connected to the port 1 of the fourth combiner; the port 3 of the second combiner is connected to the port 4 of the third combiner, the port 2 of the second combiner is connected to the port 4 of the fourth combiner; the port 2 of the third combiner is connected to the first antenna unit, and the port 3 of the third combiner is connected to the second antenna unit; the port 2 of the fourth combiner is connected to the third antenna unit, and the port 3 of the fourth combiner is connected to the fourth antenna unit; and the two radio frequency ports comprise: one of the port 2 of the first combiner and the port 3 of the first combiner, and the port 1 of the second combiner.

**35.** The wireless communications device according to claim 33 or 34, wherein, the first combiner is a 180° hybrid bridge; or, the first combiner comprises a first hybrid bridge and a first phase shifter, wherein the first hybrid bridge is a 90° hybrid bridge, and the first phase shifter is a 90° phase shifter, wherein a port 1 of the first hybrid bridge is used as the port 3 of the first combiner, a port 4 of the first hybrid bridge is used as the port 2 of the first combiner, a port 2 of the first hybrid bridge is used as the port 4 of the first combiner, one end of the first phase shifter is connected to a port 3 of the first hybrid bridge, and the other end of the first phase shifter is used as the port 1 of the first combiner, wherein a scattering matrix of the first hybrid bridge is $[S_{90}]$, wherein

$$[S_{90}] = \begin{bmatrix} s_{11} & s_{12} & s_{13} & s_{14} \\ s_{21} & s_{22} & s_{23} & s_{24} \\ s_{31} & s_{32} & s_{33} & s_{34} \\ s_{41} & s_{42} & s_{43} & s_{44} \end{bmatrix} = -\frac{1}{\sqrt{2}} \begin{bmatrix} 0 & j & 1 & 0 \\ j & 0 & 0 & 1 \\ 1 & 0 & 0 & j \\ 0 & 1 & j & 0 \end{bmatrix}$$

**36.** The wireless communications device according to any one of claims 25 to 35, wherein at least one of the third combiner and the fourth combiner is a 90° hybrid bridge.

**37.** The wireless communications device according to any one of claims 25 to 36, wherein, the second combiner is a second balun, wherein a combiner end of the second balun is used as the port 1 of the second combiner, an in-phase end of the second balun is used as the port 2 of the second combiner, and an out-phase end of the second balun is used as the port 3 of the second combiner; or, the second combiner comprises a second power divider and a sixth phase shifter, wherein a combiner end of the second power divider is used as the port 1 of the second combiner, a second divider end of the second power divider is used as the port 2 of the second combiner, one end of the sixth phase shifter is connected to a second divider end of the second power divider, and the other end of the sixth phase shifter is used as the port 3 of the second combiner.

FIG. 1-a

FIG. 1-b

FIG. 1-c

FIG. 1-d

FIG. 2

FIG. 3-a

FIG. 3-b

210

311

2

P₁ ∘

3

First
combiner

1

4

313

1

Third
combiner

2

3

312

3

2

P₂ ∘

Second
combiner

4

1

4

1

314

1

4

Fourth
combiner

2

3

220

A₁

A2

A3

A4

FIG. 3-c

311

2 ∘

1

3111

2

3

4

3

3112

1 ∘

3 ∘

4

FIG. 3-d

312

3 ∘

1

3121

2

4

4

3

2 ∘

4

3122

1 ∘

FIG. 3-e

FIG. 4-a

FIG. 4-b

FIG. 4-c

FIG. 4-d

FIG. 4-e

FIG. 5-a

FIG. 5-b

FIG. 5-c

FIG. 6-a

FIG. 6-b

FIG. 6-c

FIG. 7-a

FIG. 7-b

FIG. 7-c

FIG. 7-d

FIG. 7-e

FIG. 7-f

FIG. 8-a

FIG. 8-b

FIG. 8-c

FIG. 8-d

180° hybrid bridge

90° phase shifter    90° hybrid bridge

1    1         2    2    Sum port
                            (Σ)

4    4         3    3    Difference
                            port (Δ)

Equivalent

180° hybrid bridge

1         2    Sum port
                  (Σ)

4         3    Difference
                  port (Δ)

FIG. 9-a

90° hybrid bridge 90° phase shifter

Sum port
(Σ )

Differenc
e port
(Δ )

Equivalent

180° hybrid bridge

Sum port
(Σ )

Differenc
e port
(Δ )

FIG. 9-b

180° hybrid bridge

90° hybrid bridge

4

1 — 2

3
Difference
port ($\Delta$ )

90° phase shifter 4

1 — 3

2
Sum port
($\Sigma$ )

180° hybrid bridge

4 — 3
Difference
port ($\Delta$ )

1 — 2
Sum port
($\Sigma$ )

FIG. 9-c

FIG. 9-d

<div align="center">

## INTERNATIONAL SEARCH REPORT

</div>

| | International application No. |
|---|---|
| | PCT/CN2014/079946 |

**A.  CLASSIFICATION OF SUBJECT MATTER**

H04W 88/10 (2009.01) i

According to International Patent Classification (IPC) or to both national classification and IPC

**B.  FIELDS SEARCHED**

Minimum documentation searched (classification system followed by classification symbols)

H04W 88/-; H04B 7/-; H01Q 21/-

Documentation searched other than minimum documentation to the extent that such documents are included in the fields searched


Electronic data base consulted during the international search (name of data base and, where practicable, search terms used)

CNABS, CNKI, VEN: antenna, transceiver, feed???, port, standard, mode, multiple, double, dual

**C.  DOCUMENTS CONSIDERED TO BE RELEVANT**

| Category* | Citation of document, with indication, where appropriate, of the relevant passages | Relevant to claim No. |
|---|---|---|
| X | CN 102907168 A (HUAWEI TECHNOLOGIES CO LTD) 30 January 2013 (30.01.2013) description, paragraphs [0023] to [0030], [0038], [0039], [0046], [0047], [0052] and figure 2 | 1-6 |
| A | CN 102907168 A (HUAWEI TECHNOLOGIES CO LTD) 30 January 2013 (30.01.2013) description, paragraphs [0023] to [0030], [0038], [0039], [0046], [0047], [0052] and figure 2 | 7-37 |
| A | CN 101246998 A (XIAN HAITIAN ANTENNA SCI & TECHNOLOGY CO) 20 August 2008 (20.08.2008) the whole document | 1-37 |
| A | US 2009224848 A1 (LINDMARK BJORN) 10 September 2009 (10.09.2009) the whole document | 1-37 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 March 2015 | 23 March 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Zhen Telephone No. (86-10) 62411291 |
|---|---|

Form PCT/ISA/210 (second sheet) (July 2009)

**INTERNATIONAL SEARCH REPORT**
Information on patent family members

| | | International application No. |
|---|---|---|
| | | PCT/CN2014/079946 |

| Patent Documents referred in the Report | Publication Date | Patent Family | Publication Date |
|---|---|---|---|
| CN 102907168 A | 30 January 2013 | WO 2013185281 A1 | 19 December 2013 |
| CN 101246998 A | 20 August 2008 | CN 101577371 A | 11 November 2009 |
| | | CN 101577371 B | 07 November 2012 |
| US 2009224848 A1 | 10 September 2009 | US 8130165 B2 | 06 March 2012 |

Form PCT/ISA /210 (patent family annex) (July 2009)